# EUROPEAN PATENT APPLICATION

(11) **EP 3 865 567 A1**
(43) Date of publication of application: **18.08.2021**
(21) Application number: 21167052.6
(22) Date of filing: 25.08.2011
(51) Int. Cl.: C12M 1/34, G01N 33/04, G01N 21/78, G01N 21/84

(54) **LATERAL FLOW ASSAY ANALYSIS**

(30) Priority: 26.08.2010 US 37728710 P; 21.03.2011 US 201161454771 P
(62) Divisional of application: 11820661.4
(71) Applicant: Charm Sciences Inc., Lawrence, MA 01843 (US)
(72) Inventor: MARKOVSKY, Robert, J., Brentwood, NH 03833 (US); CHARM, Stanley, E., Boston, MA 02110 (US); GRAHAM, Paul, E., Dracut, MA 01826 (US); SKIFFINGTON, Richard, T., North Reading, MA 01864 (US)
(74) Representative: J A Kemp LLP

(57) **Abstract**

Lateral flow assay analysis is shown and described. In one embodiment, the lateral flow assay comprises a surface having a reflectance profile that is adapted to enable monitoring of the assay continuously until the detection of an analyte. In other embodiments, a lateral flow assay system includes an incubator and a reader, wherein the incubator incubates the assay concurrently as the reader generates a test result. Further, an assay measurement apparatus may include an optical detector to perform continuous image detection of the assay to generate a diagnostic test result.

## Description

This application claims the benefit of U.S. provisional application number 61/377,287, filed August 26, 2010 and U.S. provisional application number 61/454,771, filed March 21, 2011, both of which are incorporated herein by reference.

### Field of the Technology

The present disclosure relates generally to analytical testing, and more particularly to improved detection of an analyte in a lateral flow assay.

### Background

Reagent strips and films are often a helpful analytical tool in the fields of clinical chemistry, analytical medicine and food sanitation diagnostics. For example, it is advantageous to determine or to test, through quantitative or qualitative methods, various matrices, including body fluids such as serum and urine, and food, such as meat products, fruit, vegetables, milk, honey and the like. Such matrices can be tested for a variety of analytes including a variety of chemicals, biochemicals and biological molecules such as bacteria, antibiotics, for example, sulfa drugs, tetracyclines, beta-lactam drugs; toxins, such as aflatoxin, zearalonone, ochratoxin, T-2, and vomitoxin, pesticides such as organophosphates and carbamates, and active metabolites, either in materials or on the surface of materials or a combination thereof.

Generally, lateral flow assays are membrane-based test devices in which a sample that is suspected of containing the analyte of interest is placed at or near one end of the membrane strip. The sample is carried to the opposite end of the membrane strip by a mobile phase that traverses the membrane strip, for example by capillary action. While traversing the membrane strip, the analyte in the test sample, if any, encounters one or more reagents. The reagents can include binders for the analyte. Binders can be mobile and, therefore, flow with the sample, or be immobilized on the test strip as a capture agent. Depending on the test configuration, either the analyte binder, the analyte itself, or some other reagent in the test system will be captured by the immobilized capture agent and, thereby, produce a detectable signal. The signal can be generated by a label provided within the assay. The detectable signal can be measured, such as by an optical reader.

The presence and, in some cases, the concentration, of an analyte on a reagent strip may be determined by measuring the optical reflectance from an area of development on the strip. For example, the area of development on the strip may be an area of color development. Percent reflectance can be used to determine the result.

Testing commonly occurs in a controlled environment, such as a laboratory, but testing in non-laboratory settings is also common. In some applications speed and ease of use is particularly important. For example, in food processing it would be advantageous for tests to be run in non-laboratory settings because processors must wait for results. Further, it would also be advantageous for tests to be run on trucks during transport of the items. For that reason, it would be advantageous to accelerate the speed of testing, reduce the cost of equipment and tests, improve the ruggedness of the apparatus, and enhance the ease of use and simplicity of operation. In addition, it is advantageous to have confidence that test results are valid. Therefore, systems, methods and devices herein also assist in preventing fraudulent use of pre-run, known negative assays in place of true samples or use of assays pre-marked to provide a negative result that does not reflect the true nature of the sample. It is also desirable to increase the ruggedness of the assays, systems and test procedures.

Therefore, Applicants desire systems and methods for analyte detection without the drawbacks presented by traditional lateral flow assay systems and methods.

### Summary

This disclosure provides improved analyte detection that is convenient, efficient, and safe for the user, particularly when used to simplify test operation, improve test reliability, improve test ruggedness, improve testing speed, reduce the possibility of mistakes, reduce the chances of incorrect results from dirt/debris contamination, and reduce the options for trickery and mistake by limiting operator (human) interaction and/or dynamically assessing assay, including test strip, development during testing.

In one embodiment, an assay measurement apparatus to generate a diagnostic test result from an assay includes an optical detector and a microprocessor. The optical detector may be aligned in an optical path with said assay. The optical detector may be adapted to acquire an image detection on said assay due to an aberration on said assay. The microprocessor may be in communication with said optical detector. The microprocessor may be adapted to signal said optical detector to perform continuous image detection of said assay to generate said diagnostic test result.

The optical detector may comprise a decoding sensor that is adapted to align with said assay and decode a reference coding on said assay. The reference coding may activate a corresponding diagnostic test in said optical detector. The apparatus may include a multichannel reader and said reference coding may activate a corresponding channel in said multichannel reader. The apparatus may include an incubator and said reference coding may activate a corresponding incubation temperature.

The decoding sensor may be a color sensor. The color sensor may be a photodiode with sensitivity to wavelengths chosen from red, blue, green and a combination thereof. The decoding sensor may be an RFID reader. The decoding sensor may be a bar code reader.

In one example, the apparatus includes a light source. The light source may be an array of discrete light sources. For instance, the discrete light sources may comprise one light emitting diode and/or multiple light emitting diodes. The light emitting diodes may be colored diodes chosen from red, green, blue and a combination thereof. The light source may comprise an illumination profile suitable for reflecting on a test strip assay. The light source may be aligned with a light aperture, exposing light from said light source on said assay. A first mirror may be below said light aperture. A focusing lens may receive light from said first mirror. A second mirror may be positioned to direct light from said focusing lens to said optical detector. A lighting processor may be adapted to trigger said light source to emit light for a desired pattern. The lighting processor may include data storage for said desired light-emission pattern.

In another example, the optical detector will not generate a test result until said decoding sensor decodes said reference coding. The optical detector may be a light-to-voltage sensor. The optical detector may comprise a photodiode in said optical path with said assay coupled to an integrated circuit. The integrated circuit may be a monolithic integrated circuit. The optical detector may include an amplifier. The amplifier may be a translucence amplifier.

The apparatus may include a memory adapted to store information corresponding to an imaging parameter for said image detection. The decoding sensor may be chosen from a color sensor, a RFID reader, a bar code reader and a combination thereof. The optical detector may include an optical window that is adapted to block debris from contact with said optical detector. The optical detector may include an optics housing to enclose said optical detector and that is adapted to block debris from contact with said optical detector. The optical detector may monitor a diagnostic test progress. The optical detector may monitor a pre-test parameter prior to generating a diagnostic test result. The optical detector may monitor at least one pre-test parameter after said optical detector has acquired at least one image detection on said assay.

In another embodiment, in an assay measurement apparatus having an imaging detector and a microprocessor, a memory that is in communication with said microprocessor and is adapted to store information corresponding to an imaging parameter. The memory may include an instruction for monitoring a pre-test analysis on said assay. The memory may include an instruction for generating a diagnostic test result on said assay. The pre-test parameter may include a theoretical reflectance value.

In one example, the assay may include at least one test line and at least one control line, and whereby said theoretical reflectance value is a comparison between a reflectance value at said test line and a reflectance value at said control line. A reflectance value on said assay that is inconsistent with said theoretical reflectance value may indicate an inadequate flow on said assay. The inadequate flow may trigger a detectable signal to generate a no-result response. The reflectance value on said assay that is inconsistent with said theoretical reflectance value may indicate a prior analyte development on said assay. The reflectance values may suggest prior analyte development may trigger a detectable signal to deactivate said assay measurement apparatus. The reflectance value on said assay that is inconsistent with said theoretical reflectance value may indicate a contaminated optical path.

The contaminated optical path may trigger a detectable signal to generate a no-result response. The instruction for generating a test result may correspond to an image detection on said assay. The image detection may be an optical reflectance value or a transmission value. The assay may include at least one test line and at least one control line, and whereby said optical reflectance value is a comparison between a reflectance value at said test line and a reflectance value at said control line. The apparatus may be adapted to perform a continuous image detection of said assay. The assay may be a lateral flow assay. The assay may also be a lateral, capillary-flow, elongated test strip.

The test result may be determined within about thirty seconds of optical detector activation. The test result may be determined within about sixty seconds of optical detector activation. The apparatus may include a power source. The power source may be a vehicle battery. Further, the optical detector may be in communication with an onboard vehicle system.

In other embodiments, an assay measurement apparatus to generate a test result from an assay may include an imaging detector and a microprocessor with an associated memory in communication with said microprocessor. The imaging detector may be adapted to decode a reference coding on said assay and to acquire an image detection on said assay due to an aberration on said assay. The microprocessor may be adapted to signal said imaging detector to generate said test result. The memory may be in communication with said microprocessor and may be adapted to store information corresponding to a plurality of imaging parameters. The memory may include a parameter for monitoring a pre-test analysis on said assay. The memory may include a parameter for generating said diagnostic test result from said assay.

A reference coding may activate a corresponding diagnostic test in said optical detector. A multichannel reader and said reference coding may activate a corresponding channel in said multichannel reader. The apparatus may include an incubator and said reference coding may activate a corresponding incubation temperature.

The imaging detector may be adapted to decode said test reference coding and comprise a decoding sensor. The decoding sensor may be a color sensor. The color sensor may be a photodiode with sensitivity to wavelengths chosen from red, blue, green and a combination thereof. The decoding sensor may be an RFID reader. The decoding sensor may also be a bar code reader.

Typically, the apparatus includes a light source. The light source may be an array of discrete light sources. The discrete light sources may comprise light emitting diodes. The light emitting diodes may be colored diodes chosen from red, green, blue and a combination thereof. The light source may comprise an illumination profile suitable for reflecting on a test strip assay. The light source may be aligned with a light aperture exposing said light source on said assay. The light source may include a first mirror below said light aperture. A focusing lens may receive light from said first mirror. A second mirror may be positioned to direct light from said focusing lens to said optical detector. A lighting processor may be adapted to trigger said light source to emit light for a desired pattern. The lighting processor may include data storage for said desired light-emission pattern. The optical detector may not generate a test result, or even initiate reading of the test, until said decoding sensor decodes said reference coding.

The optical detector may be a light-to-voltage sensor. The optical detector may comprise a photodiode coupled to an integrated circuit in said optical path with said assay. The integrated circuit may be a monolithic integrated circuit. The optical detector may include an amplifier. The amplifier may be a translucence amplifier. The optical detector may include an optical window that is adapted to block debris from contact with said optical detector. The optical detector may also include an optics housing to enclose said optical detector and that is adapted to block debris from contact with said optical detector.

In some examples, the optical detector may monitor a diagnostic test progress. The optical detector may monitor a pre-test parameter prior to generating a diagnostic test result. Further, the optical detector may monitor at least one pre-test parameter after said optical detector has acquired at least one image detection on said assay. The pre-test parameter may include a theoretical reflectance value. The assay may include at least one test line and at least one control line, and whereby said theoretical reflectance value is a comparison between a reflectance value at said test line and a reflectance value at said control line. Theoretical reflectance values may also be a pre-set preset parameter value for the control line or the test line. For instance, the control line may be the theoretical reflectance value. A reflectance value on said assay that is inconsistent with said theoretical reflectance value may indicate an inadequate flow on said assay. The inadequate flow may trigger a detectable signal to generate a no-result response. Further, a reflectance value on said assay that is inconsistent with said theoretical reflectance value may indicate a prior analyte development on said assay. The prior analyte development may trigger a detectable signal to generate a no-result response. Yet further, a reflectance value on said assay that is inconsistent with said theoretical reflectance value may indicate a contaminated optical path. The contaminated optical path may trigger a detectable signal to get a no-result response reading, and/or deactivate said assay measurement apparatus.

An instruction for generating a test result may correspond to an image detection on said assay. The image detection may be an optical reflectance value. The assay may include at least one test line and at least one control line, and whereby said optical reflectance value is a comparison between a reflectance value at said test line and a reflectance value at said control line. The apparatus may be adapted to perform a continuous image detection of said assay. The assay may be a lateral flow assay. For instance, the assay may be a lateral, capillary-flow, elongated test strip. Further, the apparatus may include a means for a power source.

In yet another embodiment, a lateral flow assay for the detection of an analyte and having a test zone and a control zone, a surface having a reflectance profile includes at least one flow reference and at least one test result reference. The at least one flow reference area may be adapted to enable monitoring of a pre-flow development along said assay. The at least one test result reference area may be adapted to enable monitoring a pre-test detection of said analyte on said assay.

The reflectance profile may include a theoretical light reflectance measurement. The theoretical light reflectance measurement may comprise a no-flow development theoretical value. The no-flow development value may be a reflectance value of about 85. A reflectance value of greater than about 85 may generate a signal to deactivate said detection of said analyte. The flow reference area may include at least one downstream flow reference line. The downstream flow reference line may include a theoretical reflectance value after said flow reference line receives reagent flow thereon. The flow reference area may include both an intermediary flow reference line and a downstream flow reference line. The intermediary flow reference line may include a theoretical reflectance value after said flow reference line receives reagent flow thereon. The theoretical light reflectance measurement may comprise a no-analyte pre-test development theoretical value. The flow reference may also be the control zone.

The test result reference area may include at least one test line having a theoretical reflectance value. The test result reference area may include at least one control line having a theoretical reflectance value. The test result reference area may include at least one test line having a theoretical reflectance value and at least one control line having a theoretical reflectance value. A pre-set difference between said at least one test line's theoretical reflectance value and said at least one control line's theoretical reflectance value may activate a test result. Further, a pre-set difference between said at least one test line's theoretical reflectance value and said at least one control line's theoretical reflectance value may trigger an error. The error may withhold a test result.

In other embodiments, a lateral, capillary-flow elongated test strip includes a test zone, a control zone and a surface having a reflectance profile. The lateral, capillary-flow elongated test strip may have at least one reagent for the detection of at least one analyte in a sample. The test zone may include immobilized thereon a test zone capture agent that is adapted for capturing said at least one reagent. The control zone may include at least one control zone capture agent having a different binding affinity for said at least one reagent. The reflectance profile may be adapted to enable monitoring of said test strip continuously until the detection of said analyte. Typically, the test strip generates a detectable signal for detecting said analyte in said sample. In some examples, inadequate control line development, for instance according to reflectance and/or transmission at the control line, may trigger an error. In these examples, the error may trigger a signal to generate a no-result response.

The test strip may comprise a coding system having at least one reference code with a corresponding testing sequence. The testing sequence may include at least one temperature adjustment parameter. Further, the testing sequence may include an optical reader test parameter. The optical reader test parameter may include a reader channel selection. The reader test parameter may include an associated feature chosen from a standard curve, a does-response curve and a combination thereof. The reader test parameter may include at least one associated positive control point and at least one associated negative control point. The coding system may include a color matrices. The color matrices may include a color chosen from red, blue, green and combination thereof. The color matrices may be associated with a corresponding diagnostic test. The coding system may include a bar code. The coding system may include an RFID tag.

The test strip may include a first end having a sample absorbing material. The test strip may include a peel strip to introduce sample onto the sample absorbing material. The peel strip may include a peel tab at one end of the peel strip to facilitate movement of said peel strip. The sample absorbing material may be adapted to receive about 0.1 to about 1.0 mL of a fluid. The sample absorbing material may comprise a dry cellulosic material. Further, the test strip may include an opposed second end having a reactor detector material. The test strip may include a releasing area having a mobile phase receptor for the at least one analyte. The test strip may be sized and adapted to be enclosed within a test strip cavity. Further, the test strip may be sized and adapted to be enclosed within a test strip cavity of a removable incubation module. Typically, the test strip is adapted for selecting the detection of a diagnostic test group chosen from an antibiotic analyte, toxic analyte, analyte class, a combination thereof and the like.

The test zone may include at least one analyte reference line having a theoretical reflectance value. The theoretical reflectance value may be associated with a flow parameter on said test strip. The test zone surface may include a first analyte reference line having a first theoretical reflectance value and a second analyte reference line having a second theoretical reflectance value. The control zone surface may include at least one control line having a theoretical reflectance value. For instance, the theoretical reflectance value may be an optical reflectance value. The control zone may include a first control line having a first theoretical reflectance value and a second control line having a second theoretical reflectance value. In some examples, the reflectance profile is adapted to enable monitoring of said test strip prior to the detection of said analyte. Further, the test result may be detected within about thirty to about sixty seconds.

In yet another embodiment, a lateral, capillary-flow elongated test strip includes a test zone including immobilized thereon a test zone capture agent adapted for capturing at least one binder, a control zone including at least one control zone capture agent having a different binding affinity for said at least one binder, a surface having a reflectance profile adapted to enable monitoring of said test strip and a coding system having at least one coding signal, for instance a coding to correspond to a testing sequence to characterize said test strip. The reflectance profile may include at least one flow reference area adapted to enable monitoring of a flow development along said assay, and at least one monitor reference area adapted to enable monitoring of detection of said analyte on said assay.

The testing sequence may include at least one temperature adjustment parameter. The testing sequence may include an optical reader test parameter. The optical reader test parameter may include a reader channel selection. The optical reader test parameter may include an associated feature chosen from a standard curve, a does-response curve and a combination thereof. Further, the optical reader test parameter may include at least one associated positive control point and at least one associated negative control point. The coding system may include a color matrix. The color matrices may be associated with a corresponding diagnostic test. The coding system may include a bar code. The coding system may include an RFID tag.

In some examples, the test strip may include a first end having a sample absorbing material. The test strip may include a peel strip to introduce sample onto the sample absorbing material. The peel strip may include a peel tab at one end of the peel strip to facilitate movement of said peel strip. The sample absorbing material may be adapted to receive about 0.1 to about 1.0 mL of a fluid. The sample absorbing material may comprise a dry cellulosic material. The test strip may include an opposed second end having a reactor detector material. The test strip may include a releasing area having a mobile phase receptor for the at least one analyte. The test strip may be sized and adapted to be enclosed within a test strip cavity. Further, the test strip may be sized and adapted to be enclosed within a test strip cavity of a removable incubation module. Typically, the test strip is adapted for selecting the detection of a diagnostic test group chosen from an antibiotic analyte, toxic analyte, analyte class, a combination thereof and the like, either quantitatively, qualitatively or both.

The test zone may include at least one analyte reference line having a theoretical reflectance value. Typically, the theoretical reflectance value is associated with a flow parameter on said test strip. The test zone may include a first analyte reference line having a first theoretical reflectance value and a second analyte reference line having a second theoretical reflectance value. The control zone may include at least one control line having a theoretical reflectance value. The theoretical reflectance value may be an optical reflectance value. A control zone may include a first control line having a first theoretical reflectance value and a second control line having a second theoretical reflectance value. The theoretical light reflectance measurement may comprise a no-flow development theoretical value. The no-flow development value may be a reflectance value of about 85. The reflectance value of greater than about 85 may generate a signal to deactivate said detection of said analyte.

In other examples, the flow reference area may include at least one downstream flow reference line. The downstream flow reference line may include a theoretical reflectance value after said flow reference line receives reagent flow thereon. The flow reference area may include an intermediary flow reference line and a downstream flow reference line. The intermediary flow reference line may include a theoretical reflectance value after said flow reference line receives reagent flow thereon. The theoretical light reflectance measurement may comprise a no-analyte pre-test development theoretical value. The test result reference area may include at least one test line having a theoretical reflectance value. The test result reference area may include at least one control line having a theoretical reflectance value. The test result reference area may include at least one test line having a theoretical reflectance value and at least one control line having a theoretical reflectance value. A pre-set difference between said at least one test line's theoretical reflectance value and said at least one control line's theoretical reflectance value may activate a test result. Further, a pre-set difference between said at least one test line's theoretical reflectance value and said at least one control line's theoretical reflectance value may trigger an error. Typically, the error withholds a test result, including generating a no-result response.

In yet another embodiment, in an assay system having an incubator and a reader to generate a test result from an assay, a sensor may be adapted to continuously monitor said assay while said incubator incubates said assay and said reader generates said test result. The sensor may be adapted to deactivate said incubator when said sensor detects an aberration on said assay. The sensor may be an optical detector. The optical detector may be adapted to detect a reflectance value. The assay may include at least one test zone and at least one control zone, and whereby said reflectance value is a comparison between a reflectance value at said test zone and a reflectance value at said control zone. Further, if the reader and/or incubator hood is opened during incubation or reading, a signal may generate a no-result response. Additionally, if said assay is removed before a test result is generated, a signal may generate a no-result response.

In some examples, the incubator may be deactivated when said sensor detects a reflectance value on said assay that is inconsistent with a predetermined theoretical reflectance value on said assay. For instance, a reflectance value on said assay that is inconsistent with said theoretical reflectance value may indicate an inadequate flow on said assay. Further, a reflectance value on said assay that is inconsistent with said theoretical reflectance value may indicate a prior analyte development on said assay. Similarly, a reflectance value on said assay that is inconsistent with said theoretical reflectance value may indicate a contaminated optical path.

In other examples, the sensor may be adapted to deactivate said reader when said sensor detects an aberration on said assay. The sensor may be an optical detector. The optical detector may be adapted to detect a reflectance value. The assay may include at least one test zone and at least one control zone, and whereby said reflectance value is a comparison between a reflectance value at said test zone and a reflectance value at said control zone. A no-result response may be generated when said sensor detects a reflectance value on said assay that is inconsistent with a predetermined theoretical reflectance value on said assay. A reflectance value on said assay that is inconsistent with said theoretical reflectance value may indicate an inadequate flow on said assay. Further, reflectance value on said assay that is inconsistent with said theoretical reflectance value may indicate a prior analyte development on said assay. Likewise, a reflectance value on said assay that is inconsistent with said theoretical reflectance value may indicate a contaminated optical path.

The sensor may be a decoding sensor. The decoding sensor may be chosen from a color sensor, a RFID reader, a barcode reader and a combination thereof. Typically, the sensor is triggered with an activation element chosen from a hood sensor, an incubator sensor, a trigger switch and a combination thereof.

The apparatus may include a housing that is adapted to substantially enclose said reader and said incubator. The housing may include insulation adapted to withstand deformation during said incubation. The housing may also include a cavity adapted to secure said assay and receive light from said reader. The cavity may include an optical aperture to receive light from said reader. The cavity may include an adjustable fastener adapted to position said cavity in an optical path with said reader. The cavity may include insulation adapted to withstand deformation during an incubation period. The assay may be a lateral, capillary-flow test strip. And thereby the housing may include a removable optical window adapted to block debris from said sensor. The removable optical window may include a handle. The removable optical window may be cleanable. Similarly, the removable optical window may be disposable. Additionally, the removable optical window may be slide-mounted. The housing may include an air opening. The air opening may include a cap.

In particular examples, the system may include a user interface. The user interface may include an integrated circuit board, for example to support a display board. The user interface may also be adapted to view flow development. Similarly, the user interface may be adapted to view the test result, including a no-result response. The user interface may also be adapted to view flow development after said reader has detected at least one flow development on said assay.

In another embodiment, a lateral flow assay system to generate a test result from an assay includes an incubator that is adapted to incubate said assay and a reader that is adapted to read a diagnostic test on said assay. The assay may undergo a change when contacted with a sample to generate said test result

In some examples, the system includes a removable assay module. The removable assay module may include an assay cavity adapted to align said assay with said reader. The assay may be a lateral flow test strip. Thereby, the assay cavity may be sized to receive said lateral flow test strip. The removable assay module may include a hood. The hood may enclose said assay in a closed testing position and expose said assay in an open access position.

Further, the removable assay module may include a bottom face adapted to align with at least one light aperture on said reader. The bottom face may include an adjustment fastener adapted to secure said assay cavity in an optical alignment with said reader. The bottom face may also include an engagement lip to position said bottom face with said reader. The removable assay module may include at least one optical window. The removable assay module may be adapted to be removed from said system and cleaned from debris.

In some examples, the incubator includes an insulated base. The incubator may be a temperature adjustable incubator. The temperature adjustable incubator may include at least one temperature control. Thereby, the temperature adjustable incubator may include localized temperature variations. For instance, the incubator may compensate for localized temperature variations. The incubator may compensate for localized temperature variations with an analog, proportional circuit. In other examples, the incubator may compensate for localized temperature variations with a digital control circuit, for instance by utilizing a PID algorithm or PID controller. Further, the temperature adjustable incubator may include an embedded temperature sensor. The temperature adjustable incubator may include a potentiometer. The incubator may include a heater. The heater may be chosen from a ceramic heater, a resister heater element and the like. Similarly, the incubator may include a cooling system. In yet other examples, the incubator incubates said assay in a means for creating an incubation environment.

The reader may perform continuous image detection of said assay to generate said test result. The continuous image detection may include monitoring a pre-flow development along said assay, including monitoring for excessive flow and inadequate flow along said assay. The reader may include a light source oriented in a predetermined pattern with respect to said assay. The light source may include a first mirror below said light source. The light source may include a focusing lens adapted to receive light from said first mirror. Further, the light source may include a second mirror positioned to direct light from the focusing lens to said reader.

In particular examples, the reader may include a sensor. The sensor may be an optical detector that is aligned with a light source for detecting transmission of light through said assay. For instance, transmission embodiments herein may include analysis of refracted light from the assay. The sensor may be a decoding sensor. The decoding sensor may be adapted to decode at least one reference code having a corresponding testing sequence on said assay. Further, the reader may include multiple channels. Each of said channels may include an associated feature chosen from a standard curve, a does-response curve, a positive cutoff value, a negative cutoff value and the like.

In yet further embodiments, a method of generating a test result from an assay includes incubating said assay in an incubation environment and reading a diagnostic test on said assay concurrently as said incubator incubates said assay. The method may include sensing said assay continuously while said incubator is incubating said assay. The method may include deactivating said incubator when sensing an aberration on said assay. The method may include removing a removable assay module, for example for cleaning debris, or the like, from said assay module. The method may include adding a test sample to a test medium to create said assay. The method may also include enclosing said test medium within said reader. The method may include positioning a sensor relative to said test medium so that a change on said test medium is detectable by said sensor. The method may include decoding a reference coding on said assay. Thereby, the method may include selecting a channel in said reader corresponding to said reference coding on said assay. Further, the method may include incubating said assay within the incubator according to said reference coding on said assay.

The above summary was intended to summarize certain embodiments of the present disclosure. Embodiments will be set forth in more detail in the figures and description of embodiments below. It will be apparent, however, that the description of embodiments is not intended to limit the present inventions, the scope of which should be properly determined by the appended claims.

### Brief Description of the Drawings

Embodiments of the disclosure will be better understood by a reading of the Description of Embodiments along with a review of the drawings, in which:
Figure 1 is a front perspective view of one embodiment of a lateral flow assay system, with an open hood illustrating cavity and base components;
Figure 2 is a front perspective view of the lateral flow assay system embodiment of Figure 1, with the hood in a substantially closed position;
Figure 3 is a front perspective view of the embodiment of Figure 1, illustrating examples of cavity and adjustment components;
Figure 4 is an isolated side perspective view of assay base module elements;
Figure 5 is a top view of the lateral flow assay system embodiment of Figure 1 in a closed position;
Figure 6 is a sectional view of the lateral flow assay system embodiment of Figure 1 taken along lines 6-6, showing circuit board components;
Figure 7 is a front perspective view of one embodiment of a lateral flow assay system and assay components;
Figure 8 is a front perspective view of the embodiment of Figure 7 in a closed position;
Figure 9 is a partial cross-section of one example of the embodiment introduced in Figure 7 taken along 9-9;
Figure 10 is a front perspective view of one embodiment of a lateral flow assay system and assay components;

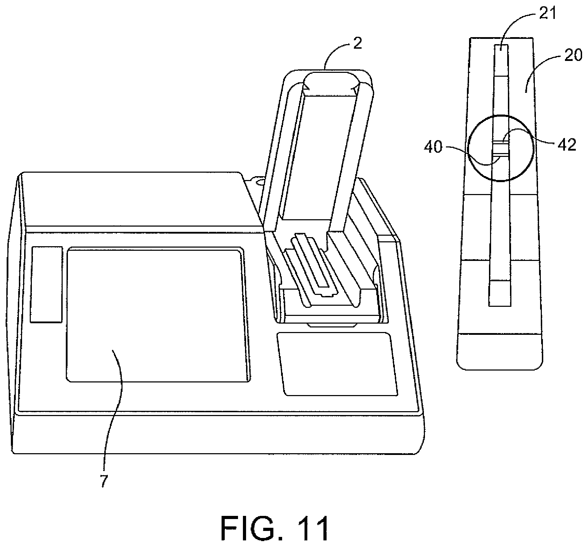

Figure 11 is a front perspective view of one embodiment of a lateral flow assay system and assay components;
Figure 12 is an isolated view of the assay illustrated in Figure 11, showing one example of a prior analyte development before testing triggering an error;
Figure 13 is a front perspective view of one embodiment of a lateral flow assay system with debris on the imaging detector; and
Figure 14 is a front perspective view of one embodiment of a lateral flow assay system having a removable assay module.

### Description of Embodiments

In the following description, like reference characters designate like or corresponding parts throughout the several views. Also in the following description, it is to be understood that such terms as "forward," "rearward," "left," "right," "upwardly," "downwardly," and the like are words of convenience and are not to be construed as limiting terms. It will be understood that the illustrations are for the purpose of describing embodiments of the disclosure and are not intended to limit the disclosure or any invention thereto.

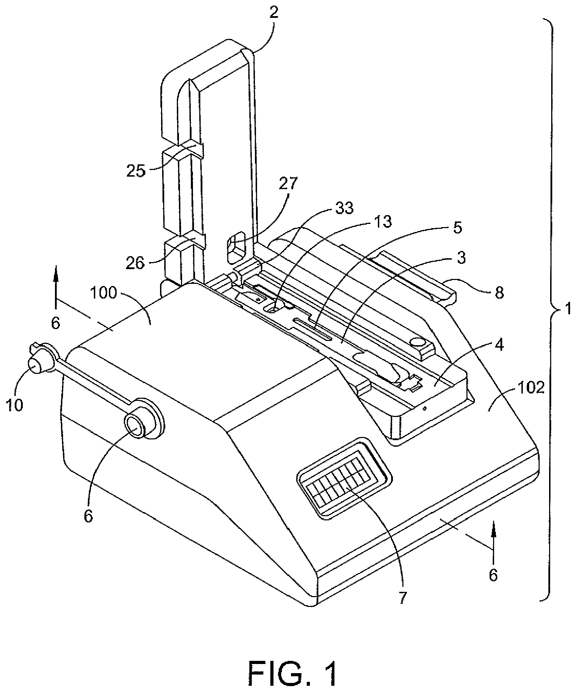

As introduced in Figure 1, a lateral flow assay system 1 is shown embodied according to the present disclosure. Lateral flow assay system 1 includes a combined reader 100 and incubator 102. Reader 100 typically includes an imaging detector, such as a sensor, while incubator 102 typically includes an insulated base 4. In some embodiments, the insulated base is a removable assay module 104. Typically, reader 100 first monitors an assay for one, or more, monitoring values, including flow rate, prior analyte development and debris. In various examples, if a proper monitoring value is detected by system 1, incubator 102 incubates the assay and reader 100 generates a test result. However, if an inconsistent monitoring value is detected, system 1 may generate a no-result response.

As shown in Figure 1, lateral flow assay system 1 is configured to receive an assay and analyze the assay to generate a diagnostic test result. Typically, the assay is a capillary-flow test strip. However, it is within the sprit of this disclosure for any of the assays herein to be other lateral flow assays.

Figure 1 shows a housing enclosing the reader 100 and incubator 102 as an integral diagnostic unit. Other embodiments include a housing that partially encloses components of lateral flow assay system 1. Typically, the reader includes cavity 3 to receive the assay, and a hood 2 to enclose the assay. The housing may have an exterior and interior, and may be opened, for instance hood 2, to receive an assay into cavity 3. As illustrated in Figure 1, hood 2 may be lifted and the assay inserted into a heating cavity such as a metallic, for example aluminum, cavity within incubator 102. Typically, cavity 3 is surrounded by insulating material, such as a plastic material, for example a thermoplastic such as polyoxymethylene, known as Delrin (DELRIN is a registered trademark of DuPont) to insulate cavity 3, and does not deform when heated to the temperatures required for generating a test result.

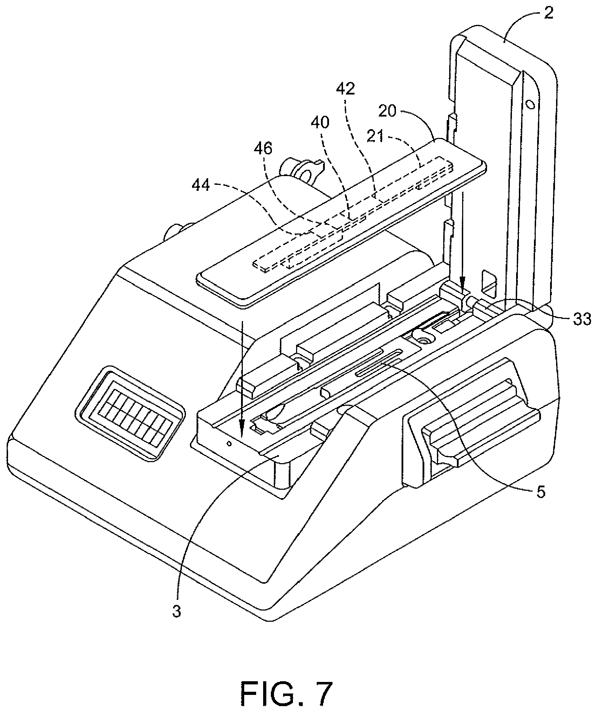

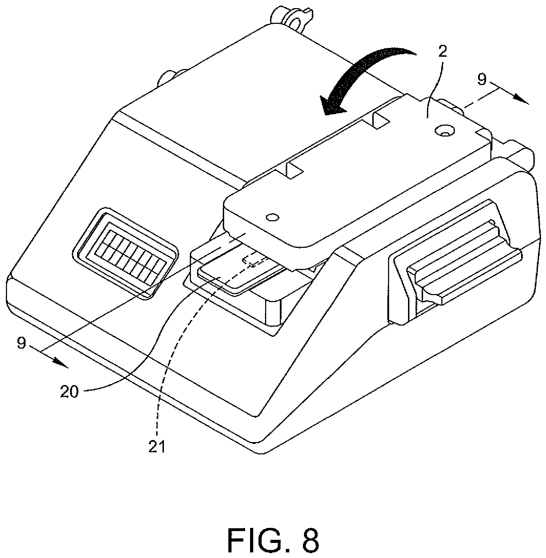

As shown in Figure 1, hood 2 may be opened into an access position to receive and/or remove an assay within cavity 3 of insulated base 4. Hood 2 may also be configured to substantially seal cavity 3 to enclose the assay in a closed testing position. Openings 25, 26 and 27, in hood 2 allow access to adjustment fasteners 11, 12 and 13 (see Figure 8), including screws and the like, when hood 2 is in a closed position. In other examples, adjustment fasteners may also be accessed when hood 2 is positioned in an open access position. Typically, adjustment fasteners align cavity 3 in relation to optics, for instance an imaging detector described hereinafter, so that changes on the assay may be detected. For example, test strips may have multiple line developments in various areas on the test strip, as described hereinafter and introduced in Figure 7. By allowing fine cavity adjustment with the adjustment fasteners through openings 25, 26 and 27, costly and cumbersome system recalibration may be minimized, or avoided. For instance, depending on a particular assay, flow, test and control lines may be in a variety of different position along the assay, as explained below, which may trigger an unexpected reflection, or transmission, value if cavity 3 is not properly adjusted.

As introduced above, cavity 3 may be configured to receive the assay, such as a lateral flow test strip, to position and maintain the assay in an optical alignment with reader 100. In some examples, cavity 3 is shaped with an elongated channel, for instance to receive a lateral, capillary-flow test strip.

Some embodiments of reader 100 are optical analysis readers, which often include a light source and an imaging detector, for example a sensor, that is aligned such that the light from the light source shines onto the assay and is then reflected onto the imaging sensor. An example of optical reader components useful in embodiments herein is described in U.S. patent No. 6,124,585 (Apparatus for measuring the reflectance of strips having non-uniform color), issued September 26, 2000, and incorporated herein by reference. Typically, the presence and, in some cases, the concentration, of an analyte on an assay may be determined by measuring, for instance, the optical reflectance from an area of development on the assay. In some examples, percent reflectance may be used to determine the result. In other examples, transmission may be used to detect the result. For instance, the assay may be transparent and include a surface having a transmission profile, similar to the reflectance profile discussed below. This structure and function described in that patent may be adapted by those of ordinary skill in the art in accordance with the disclosure herein to obtain a functioning unit.

Reader 100 may comprise a variety of light sources, including an incandescent bulb, a fluorescent tube, a light emitting diode or the like. In some examples, the light source may be an array of discrete light sources, for instance colored light emitting diodes chosen from red, green, blue and a combination thereof. In yet other examples, the light source may be an individual light source, for instance a singular diode. Typically, the light source is configured and current driven to emit an illumination pattern suitable for reflecting onto the assay, for instance along an elongated test strip. As shown in Figure 1, light can be directed to the assay, for example through aperture 5 in cavity 3, and then reflected off the assay, back through the cavity aperture 5 and directed to an optical detector.

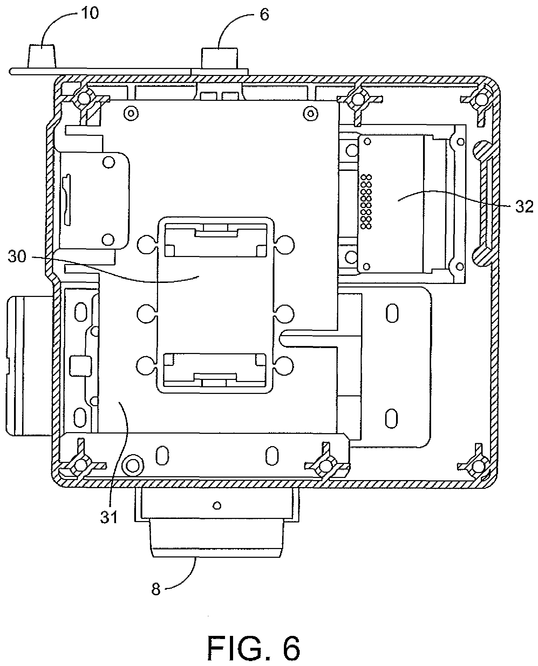

In one example, an optics circuit board 31 (see Figure 6) may have a plurality of light emitting diodes (LEDs) mounted thereon, for instance in a predetermined pattern around light-emitting aperture 5. The LEDs may be mounted on one side of optics circuit board 31. An optical detector array may be mounted to the reverse side of the same optics circuit board 31. Further, a first mirror may be positioned below the light-emitting aperture at a pre-determined angle, for instance about three hundred and fifteen degrees, to circuit board 31. A second mirror may be positioned beneath the optical detector, for instance at an angle of about two-hundred and twenty degrees to circuit board 31, such that a substantially 90-degree angle exists between first and second mirrors. A focusing lens may be positioned between the first and second mirrors. Thereby, the light emitted from the LED array may illuminate an assay and then light is reflected therefrom through light-emitting aperture 5, for instance to the first mirror, from the first mirror through the focusing lens to the second mirror, and from the second mirror onto the optical detector. In that respect, the light striking the optical detector may cause the optical detector to generate a measurable voltage. In some examples, the optical detector can output a data stream that can be converted, for example by an on onboard central processing unit, into a series of 128 distinct one-dimensional numeric readings. The 128 readings can be taken multiple separate times and averaged.

In additional examples, a light processor may be coupled to the light source to actuate the light source and provide each light with the appropriate current to generate the desired emission pattern. The light processor may be used to read and store data from the optical detector. The light processor may also be used to adjust the output of an array of discrete light sources such that the emission pattern striking the light detector array has a uniform intensity. The lighting processor may include data storage for said desired light-emission pattern.

Further, the light source may be an LED light source, including a red, green, blue LED device in a single package. For instance, the LED light source for the color sensor can also be three discrete LEDs. Similarly, a single white LED and three discrete photodiodes, with narrow bandwidth responses at the red, green and blue wavelengths, can be used as a detector front-end.

In yet other examples, one LED is used with an optional feedback loop. The feedback loop can use a photodiode to sense light output variation from the single LED. If light output changes, a signal is sent so that an appropriate adjustment can be made, for example, an increase or decrease in current to the LED. Reflectance changes can be the result of the binding of a label, including color particles such as gold beads. Reflectance changes may also be a result of contaminants and interferences in the optical path.

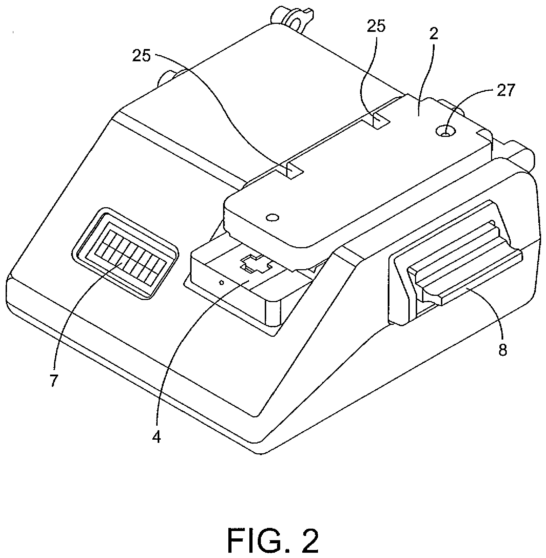

As seen in Figures 2, optical window 8 may be positioned between the assay and reader 100, for instance between a test strip and a sensor. Typically, optical window 8 blocks debris from the assay from contaminating the imaging detector itself, or other system parts used with the sensor, such as lenses and mirrors. In some examples, optical window 8 is clear and includes a handle so that optical window 8 is removable from reader 100 for cleaning. In other examples, the removable optical window may be disposable. In one example, the window material includes clear polyvinyl chloride (PVC) plastic. Window 8 may be mounted on a slide and inserted into reader 100 between cavity 3 and the sensor. The figures show only one removable and cleanable window to block debris, however, other embodiments include additional optical windows covering to protect portions of the optics and/or incubator 102 components.

Regardless of the presence of an optical window, it is possible that dust and debris will infiltrate into reader 100, for example the optical sensor mechanism. To provide an additional cleaning option, air inlet 6 can be provided for compressed air. Air inlet 6 may be covered with a tethered cap 10. In use, clear, optical window 8 is removed, and tethered cap 10 is detached. Compressed air is then blown through reader 100, so that debris collected on, or near, the reader sensor is blown out through the opening previously occupied by window 8.

Some embodiments of reader 100 are programmed with multiple channels, each of which may have separate parameters associated with a related diagnostic test. Each channel selection parameter may include a standard curve, a does-response curve and the like.

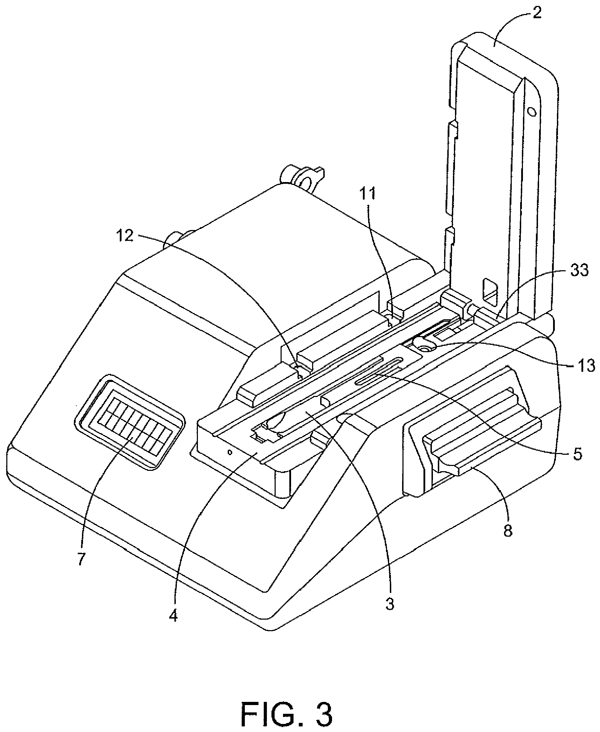

Figure 3 shows cavity adjustment fastener 13 in cavity 3, and base adjustment fasteners 11 and 12 in insulated base 4. Openings 25, 26 and 27, in hood 2 allow access to adjustment fasteners 11, 12 and 13, including screws and the like, when hood 2 is in a closed position. In other examples, adjustment fasteners may also be accessed when hood 2 is positioned in an open access position. Typically, cavity adjustment fastener 13 aligns cavity 3 in relation to optics, for instance an imaging detector described hereinafter, so that changes on the assay may be detected.

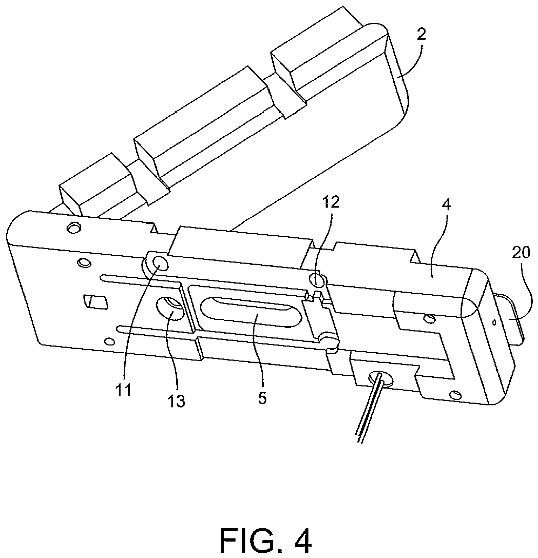

Figure 4 shows one example of insulated base 4 and hood 2 in an opened access position. As shown, the bottom face of base 4 includes openings for cavity adjustment fastener 13, openings for base adjustment fasteners 11 and 12 and light-emitting aperture 5.

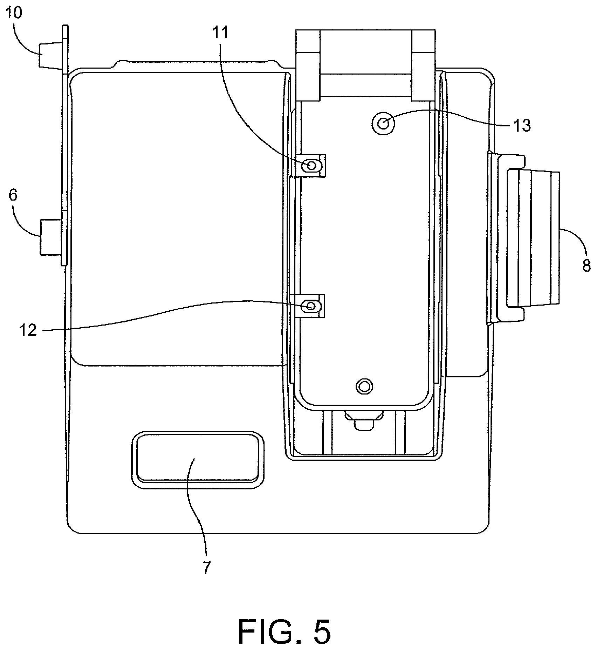

Figure 5 shows a top view of lateral flow assay 1 with hood 2 in closed testing position. Window 8 is positioned on the side of the housing to allow the user to remove window 8 for cleaning. As introduced above, air may be inserted through air inlet 6 to further clean debris from optic components.

Figure 6 is a bottom schematic view showing optics board 30, circuit board 31 and display board 32. As shown, LEDs may be mounted on one side of optics circuit board 31. Further, as shown throughout the various figures, lateral flow assay system 1 may include user interface 7. User interface 7 includes an integrated circuit board 31 supporting a display board 32. In one example, user interface 7 allows a user to view flow development. Further, user interface 7 may allow a user to monitor a subsequent flow development after reader 100 has already detected at least one flow development on the assay. Similarly, user interface 7 may display a final test result, including a no-result response.

Figure 7 illustrates one embodiment of hood 2 in open access position with assay 21 secured within test strip enclosure 20, which is adapted to be received by cavity 3. Examples of assay elements for particular diagnostic tests having components useful for embodiments herein include those described in U.S. Patent Nos.: 7,410,808, issued August 12, 2008; 7,097,983, issued August 29, 2006; 6,475,805, issued November 5, 2002; 6,319,466, issued November 20, 2001; 5,985,675, issued November 16, 1999 and U.S. Patent Application 11/ 883,784, filed August 6, 2007, all of which are hereby incorporated herein by this reference.

Generally, lateral flow assay 21 is membrane-based test device, in which a sample that is suspected of containing the analyte of interest is placed at or near one end of the membrane strip. The sample is carried to the opposite end of the membrane strip by a mobile phase that traverses the membrane strip, for example by capillary action. While traversing the membrane strip, the analyte in the test sample, if any, encounters one or more reagents. The reagents can include binders for the analyte. Binders can be mobile and, therefore, flow with the sample or be immobilized on the test strip as a capture agent. Depending on the test configuration, either the analyte binder, the analyte itself, or some other reagent in the test system, will be captured by the immobilized capture agent and, thereby, produce a detectable signal. The signal can be generated by a label provided within the assay. The detectable signal can be measured, such as by optical reader 100.

Assay 21 may include at least one test line 40 in a test zone and at least one control line 42 in a control zone. A theoretical reflectance value may be a comparison between a reflectance value at test line 40 and a reflectance value at control line 42. A pre-set difference between a theoretical reflectance value at test line 40 and a theoretical reflectance value at control line 42 may activate lateral flow assay system 1, including reader 100, to generate a test result. Further, a separate pre-set difference between a theoretical reflectance value at test line 40 and a theoretical reflectance value at control line 42 may trigger an error. Triggering of the error may cause the microprocessor to withhold a test result, including generating a no-result response, or deactivating reader 100 and/or incubator 102. Other embodiments include a comparison between a transmission value at test line 40 and a reflectance value at control line 42.

A reflectance value on the assay that is inconsistent with the theoretical reflectance value may indicate an inadequate flow in a the mobile phase on the assay. For instance, assay 21 may have a flow line 44 with a corresponding theoretical light reflectance measurement. A no-flow development value may be a reflectance value of about 85 on a reflectance scale. Such an inadequate flow may trigger a detectable signal to generate a no-result response. Additional examples include deactivating the lateral flow assay system 1, including deactivating reader 100 and/or incubator 102. In other examples, the flow reference area may include both an intermediate flow reference line 46 with a corresponding theoretical reflectance value and a flow reference line 44.

Similarly, a reflectance value on the assay that is inconsistent with the theoretical reflectance value may also indicate a prior analyte development on the assay. Such a prior analyte development may trigger a detectable signal to generate a no-result response. Further, if the assay is removed prior generating a test result, system 1 may generate a no-response result.

In some embodiments, assays 21 also include a coding reference component with a corresponding testing sequence for lateral flow assay system 1. The coding may be, for example, a color coding, a bar code, an RFID tag or the like, and may be positioned anywhere along the assay so that decoder sensor can decode the reference code, for example on the assay's surface. For instance, in some examples, the coding reference is positioned along the distal end of assay 21. Depending on the type of coding on the test strip, reader 100 may require an integrated decoding sensor for example, a bar code reader, an RFID decoder or a color sensor.

Typically, the testing sequence is at least one temperature adjustment parameter within incubator 102 and/or a channel selection of reader 100. Further, the reader test parameter may include an associated feature chosen from a standard curve, a does-response curve and the like. Other embodiments include a variety of testing sequence parameters for the associated diagnostic test being run on the assay.

In some examples, a color matrix, or matrices, reference coding, including a color chosen from red, blue, green and combination thereof, may be associated with a corresponding diagnostic test parameter. When a color coding is used on assay 21, the color can be read by the reader either by a separate optical reading system or the same system that reads the test result. That is, the assay can include a color portion that, after enclosure within the system and test initiation, will be read by the color sensor to determine the reader channel and/or the appropriate incubator temperature. For example, a photodiode with a wide dynamic range of sensitivity to red, green and blue wavelengths can be used as the detector. Red, green and blue LEDs can be used as the light source. Each LED can be turned on sequentially and the detector used to determine the reflectance of each of the colors. A black surface (totally absorbent as containing no color) will produce no reflectance of the given LEDs wavelength and, therefore, the detector will produce low output readings. A white surface will produce maximum reflectance of all three LEDs. Various colors (depending on its content in the surface measured) will produce output from the detector at varying levels.

Such color sensor component may be configured as a separate sensing component within reader 1, or depending on the sensor used to read the test strip result, a singular component that detects both development on the test strip and color coding. In various examples, assays may be coded with a color that defines the test being run. For example, a red color can indicate a test strip to be used to detect beta-lactam antibiotics. Various matrices can also be delineated by the color system. In the red example, after system 1 detects the red color on the test strip, reader 100 and/or incubator 102 may be automatically configured for that specific assay 21, for example by temperature adjustment of incubator 100 and selection of appropriate reflectance test parameters within reader 102. Therefore, in some embodiments, system 1 may an integral diagnostic test unit that is triggered by specific reference codings on the assay.

In other examples, the coding reference may comprise a radio frequency identification (RFID) tag. Such radio frequency signal transmits a signal from the tag to a decoding RFID sensor module. This signal can be used to start the analytic testing sequence, event, channel, temperature or the like in the reader and/or incubator. Similarly, the reference coding may be a bar code, wherein the bar code is placed on the assay and a bar code reader decodes the reference coding and associated testing sequence information.

Figure 8 shows assay 21 and assay enclosure 20 positioned within the reader, with hood 2 in a closed position. As shown, hood 2 is pivoted down in a closed testing position, wherein a sensor in the reader is in an optical alignment with assay 21 to generate a test result or a no-result response.

In the closed testing position, incubator 102 may incubate assay 21 in an incubation environment. For instance, incubator 102 may heat and/or cool assay 21 to provide the proper incubation environment for a corresponding assay and diagnostic test. Typically, incubator 102 is in communication to the cavity 3 and is capable of maintaining a consistent temperature within cavity 3 either by heating or cooling at a pre-defined rate. In some examples, incubator 102 includes insulated base 4. In other examples, incubator 102 incubates removable assay module 104, as described hereinafter. The incubator may be a temperature adjustable incubator. In these examples, the temperature adjustable incubator may include a temperature control. In additional embodiments, the temperature adjustable incubator may allow for localized temperature changes.

Incubator 102 may include a heater. The heater may be a ceramic heater, a resister heater element and the like. Typically, cavity 3 is designed to be small so that the heater need only draw minimum current. In that way, heating only essential areas and providing insulation around those areas minimizes power requirements. Use of various heating algorithms can be useful. For example, a proportional integrated derivative (PID) can be used. In other examples, incubator 102 may compensate for localized temperature variations from the selected target temperature, for instance a target temperature according a corresponding testing sequence. Incubator 102 may also compensate for localized temperature variations with an analog, proportional control circuit. In other examples, incubator 102 may also compensate for localized temperature variations with a digital control circuit, for instance by utilizing a PID algorithm or a PID controller. Further, those of ordinary skill would recognize that PI, PD, P or I controllers, and/or algorithms, do not preclude any of the inventions herein. For instance, temperature adjustable incubator may include a digitally controlled potentiometer to allow the microprocessor selection of temperature. In other examples, algorithms are particularly useful when test results are affected by small temperature variations. Embodiments include incubator control systems that eliminate the need for manual adjustment by use of embedded, digital temperature sensors and digital potentiometer that provides both accurate temperature reporting and a mechanism by which a micro-controller can adjust a stand-alone, analog, incubator control circuit.

In additional embodiments, cooling might be advantageous to reduce the incubation environment temperature, for example to stabilize the environment of a test medium and/or sample prior to incubation.

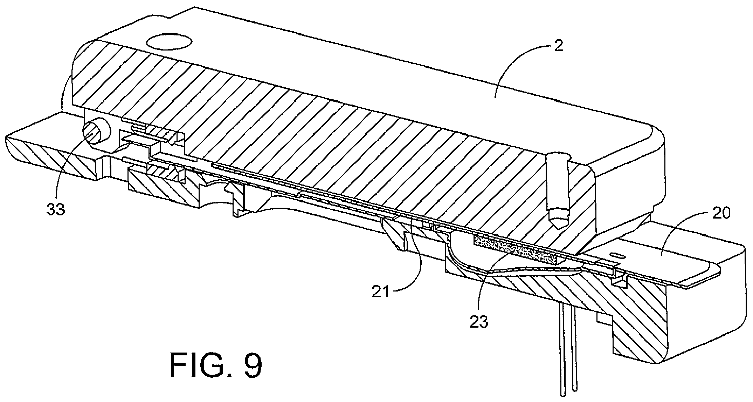

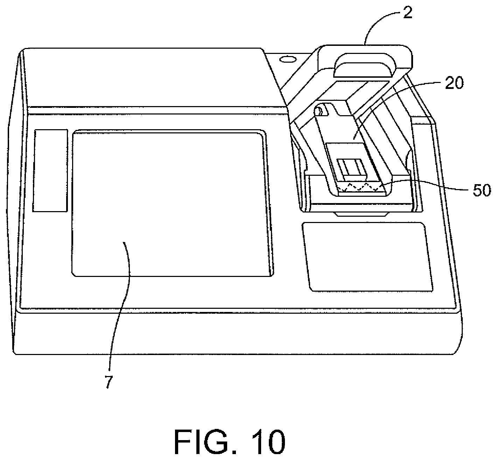

As shown in Figure 9, test strip 21 may include a first end having a sample absorbing material 23. Further, as introduced in Figure 10, test strip 21 may have a peel strip 50 to introduce sample onto sample absorbing material 23. Peel strip 50 may include a peel tab at one end of peel strip 50 to facilitate movement of said peel strip 50. Sample absorbing material 50 may be sized and configured to receive about 0.1 to about 1.0 mL of a fluid. Further, sample absorbing material 50 may be composed a dry cellulosic material. Other embodiments include other materials of sample absorbing material 50.

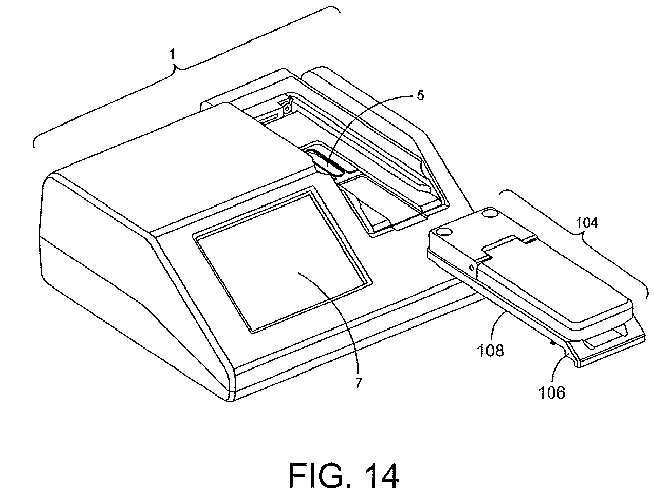

Typically, assay 21 also includes an opposed second end having a reactor detector material. Assay 21 may support a releasing area having a mobile phase receptor for the at least one analyte. Further, assay 21 may be sized and adapted to be enclosed within test strip cavity 3. Similarly, assay 21 is typically sized and adapted to be enclosed, for example enclosed tightly, within an assay cavity 3 of a removable incubation module 104, as seen in Figure 14. Typically, assay 21 is adapted for selecting the detection of a diagnostic test group chosen from an antibiotic analyte, toxic analyte, analyte class, a combination thereof and the like.

Reader 100 may include a sensor to monitor a test progress, for example on a lateral flow assay, and/or determine a test result from the lateral flow assay. The sensor is positioned relative to assay 21, so that a change on assay 21 can be detected by the sensor. Typically, the sensor is activated when the lateral flow assay is both positioned within cavity 3 and exposed to the consistent temperature within cavity 3 from incubator 102. For example, the sensor can be activated by closing hood 2 that encloses cavity 3. The sensor may include an optical detector and a microprocessor. Typically, the optical detector is aligned in an optical path with the assay and is adapted to acquire an image detection on the assay and is performing a continuous image detection acquisition of the assay.

The sensor may be a single photodiode, multiple photodiodes, a linear photodiode array, a charged couple device, a complementary metal oxide semiconductor and a combination thereof. Therefore, at the same time as incubation and flow, or before, or after incubation and flow is complete, the optical sensors can monitor the assay and compare optical readings, such as reflectance and/or transmission readings, to determine various aspects including sample flow, interference with the optical path such as by debris in the optical path, line development and test result. When the assay and line development falls within preset parameters, the test can continue to completion and provide a final result. Checking of the assay by the optical sensor prior to test completion can provide the user with additional confidence that the test was processed properly.

Typically, the output may be a voltage, current or a digital output proportional to light intensity as determined by signal conditioning circuitry. Some examples of reader 100 include the TSL12T and TSL13T sensors available from TAOS (Texas Advanced Optolectronic Solutions). The TSL12T and TSL13T sensors are cost-optimized, highly integrated light-to-voltage optical sensors, each combining a photodiode and a transimpedance amplifier (feedback resistor = 80 MΩ and 20 MΩ respectively) on a single monolithic integrated circuit. The photodiode active area is 0.5 mm x 0.5 mm and the sensors respond to light in the range of 320 nm to 1050 nm. Output voltage is linear with light intensity (irradiance) incident on the sensor over a wide dynamic range.

In some examples, the microprocessor may be in communication with the optical detector, and in particular with the sensor. In other examples, the optical detector outputs to other logic means. Further, the microprocessor may be adapted to signal the optical detector to perform continuous image detection of said assay to generate said diagnostic test result. The microprocessor may include, or have associated, memory to store information corresponding to an imaging parameter. The memory may include instructions for monitoring a pre-test analysis on the assay and for generating a diagnostic test result on the assay.

In some embodiments having assays with coding references, as discussed herein, the optical detector may have a decoding ability to decode a reference code on the assay. Thereby, the decoding sensor may thereby active a corresponding diagnostic test in reader 100. For instance, the decoding sensor may activate a corresponding channel in a multichannel reader 100 and/or activate a corresponding incubation temperature profile within incubator 102.

The decoding sensor may be a color sensor. For example, the color sensor may be a photodiode with sensitivity to wavelengths chosen from red, blue, green and a combination thereof. In such an example, a color reading an arrangement of photodiodes, each with a specific color filter, is used as the decoding sensor and a white LED (which provides a wide spectrum of light through the 3 bandwidths (Red, Green and Blue)) is used as the light source. When the LED is turned on, the output from each of the photodiodes is obtained to determine the reflectance of that specific color. The decoding sensor may also be an RFID reader or a bar code reader.

Although reference is often made herein to optical reflectance, and optical reflectance readers, a variety of readers may be usefully employed including, for example, transmittance reader, fluorometers, luminometers, bar code readers, radiation detectors (such as scintillation counters), UV detectors, infrared detectors, electrochemical detectors or optical readers, such as spectrophotometers, charged coupled device (CCD) or complimentary metal oxide semiconductor (CMOS) can be used as an image sensor. An optical reflectance reader can be programmed to analyze the test strip through two-dimensional readings, rather than through the one dimensional, 1x128, readings. For example, a 5x128 or 512 x 492 matrix of "pixels." Such a 2-dimensional reading widens the reflectance capture area to capture reflectance directly from the sides of the test strip.

In other examples, a transmittance reader, such as an ultraviolet Visible Near-Infra red (UV-Vis-NIR) spectroscopy may provide a characterization of the absorption, transmission, and/or reflectivity of the assay. For instance, such an analytical technique may measure the amount of light absorbed on the assay at a given wavelength. Those of ordinary skill in the art would appreciate that a molecule, or part of a molecule, can be excited by absorption. Typically, organic chromophores which absorb strongly in the UV or visible portions of the spectrum nearly always involve multiple bonds, such as C=C, C=O or C=N. This molecular excitation energy may be dissipated as heat, for instance kinetic energy, by the collision of the excited molecule with another molecule, e.g., a solvent molecule, as the molecule returns to the ground state. In other embodiments, the excitation energy may be dissipated by the emission of light in a via fluorescence. Regardless of the process, an excited molecule may possess any one of a set of discrete amounts of energy, for instance as described by the laws of quantum mechanics. In examples herein, the major energy levels may be determined primarily by the possible spatial distributions of the electrons, and to a lesser extent by vibrational energy levels, which arise from the various modes of vibration of the molecule.

Therefore, in particular examples herein, absorbance measurements may be determined by the concentration of a solute on the assay. For instance, the progress of such a chemical reaction may be followed using a spectrophotometer in reader 100 to measure the concentration of either a reactant or a product over time. In other examples, a transmission spectroscopy may be used for solid, liquid, and gas sampling. Typically, light is passed through the assay and compared to light that has not. The resulting spectrum may depends on the pathlength or sample thickness, the absorption coefficient of the sample, the reflectivity of the sample, the angle of incidence, the polarization of the incident radiation, and, for particulate matter, on particle size and orientation.

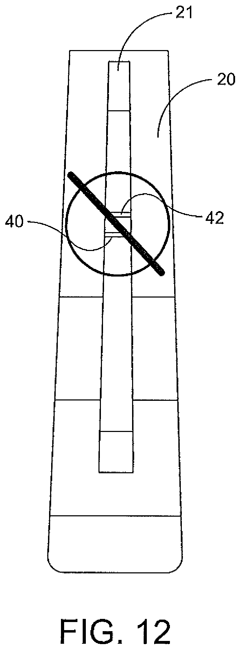

In some embodiments, the sensor monitors assay 21 for prior analyte development before generating a test result. As shown in Figure 12, prior analyte development on test line 40 and control line 42 indicates an error. For instance, assay 21 may have a theoretical reflectance value that is a comparison between a reflectance value at test line 40 and a reflectance value at control line 42. A reflectance value on assay 21 that is inconsistent with the theoretical reflectance value may indicate a prior analyte development on assay 21, including a pre-run assay, contaminated assay or the like. The prior analyte development may trigger a detectable signal to generate a no-result, for instance a no-run, response and/or deactivate assay system 1. Other outputs may be indicative of the detected condition and are also within the scope of these inventions.

Further, the sensor may monitor flow development along assay 21 to assess whether an inadequate sample volume has been applied to assay 21, or that excess volume has been applied. For instance, prior to determining the test result, the sensor may monitor the flow progress on assay 21 along flow line 44. In other examples, the sensor will monitor flow progress at both flow line 44 and along the assay, for instance at intermediary flow line 46. The sensor may be configured to sense whether an adequate flow of a reagent occurred on assay 21, while assay 21 was within cavity 3, and/or whether one or more lines, i.e. reflectance or transmission values, were present on assay 21 prior to contact of assay 21 with the sample to be tested.

In addition, the sensor may be configured to detect whether dirt/debris is contaminating the optical path. For instance, the sensor may monitor the optical path for interference such as by debris. To determine that a test has run properly, or that the assay is free of dirt/debris, predetermined optical measurements, such as reflectance values or transmission values, may be stored electronically. The preset values, or preset parameters, can include a theoretical reflectance, or transmission, value from an unused assay (prior to receiving reagents). Preset values may also include values may be one or more theoretical test lines and/or one more theoretical control lines on the assay, and may also include a difference between the theoretical reflectance values for the one or more control lines and the theoretical value for the one or more test lines.

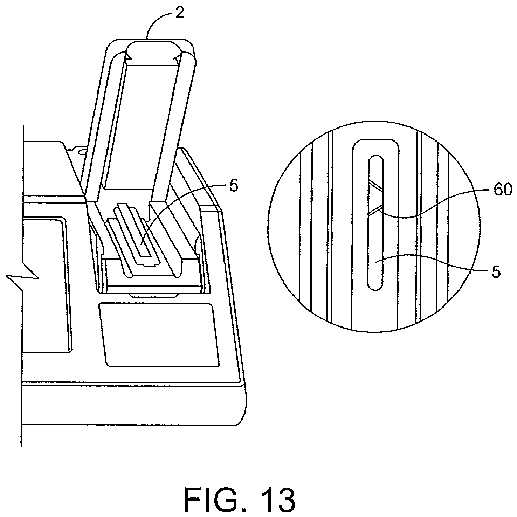

Figure 13 shows one embodiment of lateral assay system 1, with debris 60 over light aperture 5. In use, a reflectance value on an assay that is inconsistent with the theoretical reflectance value may indicate a contaminated optical path, such as debris 60 as shown here. Lateral assay system 1 may be adapted to generate a no-run response and/or deactivate reader 100 and/or incubator 102 when the sensor detects such an aberration.

In other examples, the optical detector may monitor at least one pre-test parameter after the optical detector has already acquired at least one image detection on the assay. Similarly, optical detector generates a test result from assay 21, for instance by a comparison between at least two lines on the assay, for examples lines 40 and 42 of the test strip depicted in Figure 7. As indicated above and in the incorporated references, optical detector may compare changes in reflectance values of two lines on the assay, for instance at least one test line 40 and at least one control line 42.

Particular embodiments include configuring the lateral flow assay system to allow concurrent incubation and reading of assay 21. The combination allows sensors to be used to detect not only test results, but also to check parameters that might indicate whether or not flow has occurred on the assay and that such flow caused a proper test result. That is, while sample, including the potential analyte, or analytes, of interest, is flowing on assay 21 and binding is occurring in a mobile phase and on assay 21, the assay is being incubated. By combining reader 100 and incubator 102 into such an integral diagnostic unit 1, results can be achieved quicker than when assays, such as test strips or other test medium, are incubated in one device and then moved to a separate device for reading. For instance, speed-to-result can be enhanced, for example to as little as less than about 60 seconds or even less than about 30 seconds. Generally, such a combined system can be dynamic, sensing changes in the assay as they occur by looking for areas of decreased reflectance and/or transmission anywhere on the unused or not-fully developed assay.

A level of protection is provided to prevent pre-run assays from being read (for example, reader 100 will determine if line development, for instance at flow line 44, intermediary flow line 44, test line 40 and/or control line 42 occurred prior to the time when sample flow could have reached such line) and to prevent incorrect readings caused by debris, or similar interference with system optics.

Various triggers may initiate assay analysis of system 1. For example, closing of hood 2 may initiate test operation, including optical measurement. Alternatively a separate switch can be used to initiate test operation after hood 2 is closed. In either case, a first reading may determine whether a proper assay is correctly position in the system. If assay 21 is detected, a reading sequence is initiated. For example, optical measurement, such as to detect light reflected off assay 21, can utilize values, such as average reflectance values, in certain areas of assay 21. Initially system 1 may analyze the assay to determine if the optical path is clear of interference, such as from debris. Debris can be in any number of locations in the optical path including on assay 21 or assay container 22. Concurrently with analyzing the optical path for debris, or subsequent thereto, the system can analyze the assay to determine if line development has already occurred. That is, whether a proper assay has been inserted into cavity 3. For example, test strips configured to develop within certain areas, such as a test line and control line, should have no development in those areas before the analyte and mobile phase have had adequate time to reach them.

In some examples, lines configured to develop a change in reflectance, and/or transmission, when contacted by reagents and sample should not develop until flow of sample and reagents has arrived and binding has occurred. That flow will not have arrived at the time of an initial, for example about three second, read. As such, if line development is detected at the initial assay analysis, then an error message will be delivered to the user and further readings, for example further optical measurements, can be aborted. In this way, this mechanism can detect the use of pre-run (known negative) assay or pre-marked assays. Generally, when reflectance is reduced on an unused assay, either by the presence of line development or other darkening of the assay away from baseline, the reduction in reflectance can inform the user that something has occurred either on the assay or in the optical path, so that the result should not be accepted.

After initial optical readings are found satisfactory and appropriate reader parameters and incubator temperatures are selected, either manually or automatically, further optical readings, for example approximately fifteen seconds after sample has been applied, can be used to determine whether adequate flow has occurred. For example, optical readings can determine whether or not reagents have flowed between a sample application region and a downstream line such as a test line.

The presence of label, such as colored particles, for example gold sol beads, flowing in the mobile phase, and the resulting reflectance changes on the assay between the sample application area and a first test line, can inform the user that flow is occurring and return an error message if no flow is detected. An assay lacking predictable reflectance changes might either have had no sample flow, or inadequate sample flow. Certain measurements can also indicate whether excessive flow has occurred, as in the case where too great a volume of sample has been applied to a test strip and possible reflectance change due to reagents is overwhelmed by the excessive sample volume. Reflectance changes between the sample application area and result detection areas, such as test line and control line, can be temporary and disappear as the mobile phase flows. If optical measurements are taken such temporary/non-permanent changes can be detected.

If an assay, including a test strip or other assay type, has passed the preliminary readings, system 1 may initiate readings to generate a test result. For example, after approximately thirty seconds test line and control line analysis can begin. When there is enough differentiation, for example percent reflectance difference, between the test and control, a result can be provided. Typically, negative results and more extreme results can be provided sooner and results closer to threshold levels will take longer. For example, in the case of a test in which the reflectance value on the test line relates inversely to the amount of analyte, if the test line reflectance is reduced to a certain level then a negative result can be called. In some examples, if hood 2 is opened while reader 100 is reading the assay, a signal may generate a no-result response.

Reader 100 and/or incubator 102 may be powered by a power source. In some examples for on-site analysis, for instance in rugged environments, the power source may be a vehicle battery. Further, reader 100 may be in communication with an onboard vehicle system.

As introduced in Figure 14, lateral flow assay system 1 may include removable assay module 104 to be removed from system 1 and cleaned from debris. Typically, removable assay module104 includes a similar assay cavity as described above, to align assay 21 with optics of reader 100 while in a closed testing position. In some examples, the assay is a lateral flow test strip and the assay cavity within removable assay module 104 is sized to receive the lateral flow test strip.

As discussed above, removable assay module 104 may include a hood. The hood may enclose the assay in a closed testing position and be opened to clean away debris in an open maintenance position when removable assay module 104 is removed from system 1. In some examples, if the hood of removable assay module 104 is opened while reader 100 is reading the assay, a signal may generate a no-result response. Further, removable assay module 104 may have a bottom face having a window 108 to slide in between reader 100 and the assay in a manner so that at least one light aperture 5 aligns with the assay in a closed testing position. Window 108 may be removable and cleanable as discussed above, and further the bottom face may include holes to receive an adjustment fastener to secure removable assay module 104 into an optical alignment with reader 100. In other examples, bottom face 108 may include engagement lip 106 to position bottom face 108 securely with reader 100.

In other embodiments, the disclosure includes a lateral flow assay system 1 kit. In this embodiment, the kit may comprise an incubator, e.g. any of the incubators and/or incubator components previously shown or described, and a reader, e.g. any of the readers and/or reader components shown or described.

In yet another embodiment of the disclosure, a method for analyte analysis includes incubating the assay, e.g. including any of the embodiments previously shown or described, and reading the assay to generate a test result, e.g. including any of the embodiments previously shown or described. In particular examples, a diagnostic test method for detecting an analyte in a test sample includes adding a test sample to a test medium, such as a lateral flow test strip, to create an assay, the test medium configured to provide a detectable test result after incubation with the test sample; enclosing the test medium within a hood, the hood configured to enclose a cavity, the cavity configured to receive the test medium and connected with a temperature control source, the temperature control source capable of maintaining a consistent temperature; positioning a sensor, such as an optical sensor capable of reading reflectance from the test medium, relative to the test medium so that a change on the test medium is detectable by the sensor; and activating the sensor, such as by closing the hood, the activation causing the sensor to compare the test medium to a preset parameter. When the test medium is not within the preset parameter, a test result is not provided, and wherein when the test medium is within the preset parameter, the test result is determined from the test medium, the test result indicating whether an analyte was detected in the test sample.

In other embodiments of the methods, a preset parameter can be used to determine either or both whether an adequate flow of reagents occurred on the test strip while the test strip was within the cavity and whether one or more test lines are present on the test strip prior to being contacted by the test sample. To do so the sensor can be configured to continuously analyze changes on the test medium until a test result occurs. The test result can be determined by a comparison between changes, such as reflectance changes, in a first line, for example a test line, and a second line, for example a control line, on the test strip.

A further example of the methods include using preset parameters to compare the test strip, prior to sample flow thereon, including prior to sample application, with the actual strip being used. For example, a blank strip, prior to reagent flow or prior to sample application, will have a theoretical reflectance profile within a predictable range. If areas of reduced reflectance are detected, that did not result from sample/reagent flow on the strip, then it is possible not only that something untoward has occurred with the test strip but also it is possible that the optical path has become contaminated and requires cleaning. Such contamination can be on the strip or within the reader. Generally, an unused test strip should have no areas of reduced reflectance. Any such areas can indicate a problem, whether from dirt/debris, use of a test strip that was already run, or otherwise. In any case, the test result may not be valid.

Numerous characteristics and advantages have been set forth in the foregoing description, together with details of structure and function. Many of the novel features are pointed out in the appended claims. The disclosure, however, is illustrative only, and changes may be made in detail, especially in matters of shape, size, and arrangement of parts, within the principle of the disclosure, to the full extent indicated by the broad general meaning of the terms in which the general claims are expressed. It is further noted that, as used in this application, the singular forms "a," "an," and "the" include plural referents unless expressly and unequivocally limited to one referent.

The claims of the parent application are reproduced below as clauses. These clauses define preferred embodiments. The applicant reserves the right to pursue protection for the combinations of features set out in these clauses, and/or for any other subject-matter contained in the parent application as filed, either in the present divisional application or in a further application divided from the present divisional application. The claims of the parent application are not the claims of this divisional application.
1. A lateral flow assay system to generate a test result from an assay, the assay having a membrane wherein a sample that is suspected of containing the analyte is placed at one end of the membrane and the sample is carried to the opposite end of the membrane by a mobile phase that traverses the membrane, said system comprising:
   a. an incubator adapted to incubate said assay in an incubation environment and
   b. a reader adapted to read a diagnostic test on said assay and including (i) a removable assay module, and (ii) a sensor adapted to continuously monitor said assay,
   wherein said incubator incubates said assay concurrently as said reader generates said test result.
2. An assay measurement apparatus to generate a diagnostic test result from an assay, said apparatus comprising:
   a. an optical detector aligned in an optical path with said assay, wherein said optical detector is adapted to acquire an image detection on said assay due to an aberration on said assay; and
   b. a microprocessor in communication with said optical detector, wherein said microprocessor is adapted to signal said optical detector to perform continuous image detection of said assay to generate said diagnostic test result.
3. The apparatus of Aspect 2, wherein said optical detector comprises a decoding sensor adapted to align with said assay and decode a reference coding on said assay.
4. The apparatus of Aspect 3, wherein said reference coding activates a corresponding diagnostic test in said optical detector.
5. The apparatus of Aspect 3, wherein said apparatus includes a multichannel reader and said reference coding activates a corresponding channel in said multichannel reader.
6. The apparatus of Aspect 5, wherein said corresponding channel includes an associated feature chosen from a standard curve, a does-response curve, a positive cutoff value, a negative cutoff value and a combination thereof.
7. The apparatus of Aspect 3, wherein said apparatus includes an incubator and said reference coding activates a corresponding incubation temperature.
8. The apparatus of Aspect 3, wherein said decoding sensor is a color sensor.
9. The apparatus of Aspect 8, wherein said color sensor is a photodiode with sensitivity to wavelengths chosen from red, blue, green and a combination thereof.
10. The apparatus of Aspect 3, wherein said decoding sensor is reader chosen from an RFID reader, a bar code reader and a combination thereof.
11. The apparatus of Aspect 2, including a light source.
12. The apparatus of Aspect 11, wherein said light source is an array of discrete light sources.
13. The apparatus of Aspect 12, wherein said discrete light sources comprise light emitting diodes.
14. The apparatus of Aspect 11 wherein said light emitting diodes are colored diodes chosen from red, green, blue and a combination thereof.
15. The apparatus of Aspect 11, wherein said light source comprises an illumination profile suitable for reflecting on a test strip assay.
16. The apparatus of Aspect 11, wherein said light source is aligned with a light aperture exposing said light source on said assay.
17. The apparatus of Aspect 16, including a first mirror below said light aperture.
18. The apparatus of Aspect 17, including a focusing lens to receive light from said first mirror.
19. The apparatus of Aspect 18, including a second mirror positioned to direct light from said focusing lens to said optical detector.
20. The apparatus of Aspect 11, including a lighting processor adapted to trigger said light source to emit light for a desired pattern.
21. The apparatus of Aspect 20, wherein said lighting processor includes data storage for said desired light-emission pattern.
22. The apparatus of Aspect 3, wherein said optical detector will not generate a test result until said decoding sensor decodes said reference coding.
23. The apparatus of Aspect 2, wherein said optical detector is a light-to-voltage sensor.
24. The apparatus of Aspect 2, wherein said optical detector comprises a photodiode coupled to an integrated circuit in said optical path with said assay.
25. The apparatus of Aspect 24, wherein said integrated circuit is a monolithic integrated circuit.
26. The apparatus of Aspect 2, wherein said optical detector includes an amplifier.
27. The apparatus of Aspect 26, wherein the amplifier is a translucence amplifier.
28. The apparatus of Aspect 2, including a memory adapted to store information corresponding to an imaging parameter for said image detection.
29. The apparatus of Aspect 2, including a decoding sensor chosen from a color sensor, a RFID reader, a bar code reader and a combination thereof.
30. The apparatus of Aspect 2, wherein said optical detector includes an optical window adapted to block debris from contact with said optical detector.
31. The apparatus of Aspect 2, wherein said optical detector includes an optics housing to enclose said optical detector and is adapted to block debris from contact with said optical detector.
32. The apparatus of Aspect 2, wherein said optical detector monitors a diagnostic test progress.
33. The apparatus of Aspect 32, wherein said optical detector monitors a pre-test parameter prior to generating a diagnostic test result.
34. The apparatus of Aspect 32, wherein said optical detector monitors at least one pre test parameter after said optical detector has acquired at least one image detection on said assay.
35. In an assay measurement apparatus having an imaging detector and a microprocessor, a memory in communication with said microprocessor and adapted to store information corresponding to an imaging parameter and comprising:
   a. an instruction for monitoring a pre-test analysis on said assay; and
   b. an instruction for generating a diagnostic test result on said assay.
36. The apparatus of Aspect 35, wherein said pre-test parameter includes a theoretical reflectance value.
37. The apparatus of Aspect 36, wherein said assay includes at least one test line and at least one control line, and whereby said theoretical reflectance value is a comparison between a reflectance value at said test line and a reflectance value at said control line.
38. The apparatus of Aspect 36, wherein a reflectance value on said assay that is inconsistent with said theoretical reflectance value indicates an inadequate flow on said assay.
39. The apparatus of Aspect 38, wherein said inadequate flow triggers a detectable signal to generate a no-result response.
40. The apparatus of Aspect 36, wherein a reflectance value on said assay mat is inconsistent with said theoretical reflectance value indicates a prior analyte development on said assay.
41. The apparatus of Aspect 40, wherein said prior analyte development triggers a detectable signal to generate a no-result response.
42. The apparatus of Aspect 36, wherein a reflectance value on said assay that is inconsistent with said theoretical reflectance value indicates a contaminated optical path.
43. The apparatus of Aspect 42, wherein said contaminated optical path triggers a detectable signal to generate a no-result response.
44. The apparatus of Aspect 35, wherein said instruction for generating a test result corresponds to an image detection on said assay.
45. The apparatus of Aspect 44, wherein said image detection is an optical reflectance value.
46. The apparatus of Aspect 45, wherein said assay includes at least one test line and at least one control line, and whereby said optical reflectance value is a comparison between a reflectance value at said test line and a reflectance value at said control line.
47. The apparatus of Aspect 35, wherein said apparatus is adapted to perform a continuous image detection of said assay.
48. The apparatus of Aspect 35, wherein said assay is a lateral flow assay.
49. The apparatus of Aspect 48, wherein said assay is a lateral, capillary-flow, elongated test strip.
50. The apparatus of any one of the proceeding Aspects wherein a test result is determined within about thirty seconds of optical detector activation.
51. The apparatus of any one of the preceding Aspects wherein a test result is determined within about sixty seconds of optical detector activation.
52. The apparatus of any one of the proceeding Aspects including a power source.
53. The apparatus of Aspect 52, wherein the power source is a vehicle battery.
54. The apparatus of any one of the proceeding Aspects wherein said optical detector is in communication with an onboard vehicle system.
55. An assay measurement apparatus to generate a test result from an assay, sai apparatus comprising:
   a. an imaging detector aligned with said assay, wherein said imaging detector is adapted to decode a reference coding on said assay and to acquire an image detection on said assay due to an aberration on said assay,
   b. a microprocessor in communication with said imaging detector, wherein said microprocessor is adapted to signal said imaging detector to generate said test result; and
   c. a memory in communication with said microprocessor and adapted to store information corresponding to a plurality of imaging parameters including (i) a parameter for monitoring a pre-test analysis on said assay, and (ii) a parameter for generating said diagnostic test result on said assay.
56. The apparatus of Aspect 55, wherein said reference coding activates a corresponding diagnostic test in said optical detector.
57. The apparatus of Aspect 55, wherein said apparatus includes a multichannel reader and said reference coding activates a corresponding channel in said multichannel reader.
58. The apparatus of Aspect 55, wherein said apparatus includes an incubator and said reference coding activates a corresponding incubation temperature.
59. The apparatus of Aspect 55, wherein said imaging detector is adapted to decode said test reference coding.
60. The apparatus of Aspect 59, wherein said decoding sensor is a color sensor.
61. The apparatus of Aspect 60, wherein said color sensor is a photodiode with sensitivity to wavelengths chosen from red, blue, green and a combination thereof.
62. The apparatus of Aspect 59, wherein said decoding sensor is an RFID reader.
63. The apparatus of Aspect 59, wherein said decoding sensor is a bar code reader.
64. The apparatus of Aspect 22, including a light source.
65. The apparatus of Aspect 64, wherein said light source is an array of discrete light sources.
66. The apparatus of Aspect 65, wherein said discrete light sources comprise light emitting diodes.
67. The apparatus of Aspect 64, wherein said light emitting diodes are colored diodes chosen from red, green, blue and a combination thereof.
68. The apparatus of Aspect 64, wherein said light source comprises an illumination profile suitable for reflecting on a test strip assay.
69. The apparatus of Aspect 64, wherein said light source is aligned with a light aperture exposing said light source on said assay.
70. The apparatus of Aspect 69, including a first mirror below said light aperture.
71. The apparatus of Aspect 70, including a focusing lens to receive light from said first mirror.
72. The apparatus of Aspect 71, including a second mirror positioned to direct light from said focusing lens to said optical detector.
73. The apparatus of Aspect 64, including a lighting processor adapted to trigger said light source to emit light tor a desired pattern.
74. The apparatus of Aspect 73, wherein said lighting processor includes data storage for said desired tight-emission pattern.
75. The apparatus of Aspect 55, wherein said imaging detector will not generate a test result until said decoding sensor decodes said reference rating.
76. The apparatus of Aspect 55, wherein said imaging detector is a light-to-voltage sensor.
77. The apparatus of Aspect 55, wherein said imaging detector comprises a photodiode coupled to an integrated circuit in said optical path with said assay.
78. The apparatus of Aspect 77, wherein said integrated circuit is a monolithic integrated circuit.
79. The apparatus of Aspect 55, wherein said imaging detector includes an amplifier.
80. The apparatus of Aspect 80, wherein the amplifier is a translucence amplifier.
81. The apparatus of Aspect 55, wherein said imaging detector includes an optical window adapted to block debris from contact with said optical detector.
82. The apparatus of Aspect 55, wherein said imaging detector includes an optics housing to enclose said optical detector and adapted to block debris f om contact with said optical detector.
83. The apparatus of Aspect 55, wherein said imaging detector monitors a diagnostic test progress.
84. The apparatus of Aspect 83, wherein said imaging detector monitors a pre-test parameter prior to generating a diagnostic test result.
85. The apparatus of Aspect 83, wherein said imaging detector monitors at least one pre-test parameter after said optical detector has acquired at least one image detection on said assay.
86. The apparatus of Aspect 55, wherein said pre-test parameter includes a theoretical reflectance value.
87. The apparatus of Aspect 86, -wherein said assay includes at least one test line and at least one control line, and whereby said theoretical reflectance value is a comparison between a reflectance value at said test line and a reflectance value at said control line.
88. The apparatus of Aspect 86, wherein a reflectance value on said assay that is inconsistent with said theoretical reflectance value indicates an inadequate flow on said assay.
89. The apparatus of Aspect 88, wherein said inadequate flow triggers a detectable signal to deactivate said assay measurement apparatus.
90. The apparatus of Aspect 86, wherein a reflectance value on said assay that is inconsistent with said theoretical reflectance value indicates a prior analyte development on said assay.
91. The apparatus of Aspect 90, wherein said prior analyte development triggers a detectable signal to generate a no-result response.
92. The apparatus of Aspect 86, wherein a reflectance value on said assay mat is inconsistent with said theoretical reflectance value indicates a contaminated optical path.
93. The apparatus of Aspect 92, wherein said contaminated optical path triggers a detectable signal to generate a no-result response.
94. The apparatus of Aspect 55, wherein said instruction for generating a test result corresponds to an image detection on said assay.
95. The apparatus of Aspect 94, wherein said image detection is an optical reflectance value.
96. The apparatus of Aspect 45, wherein said assay includes at least one test line and at least one control line, and whereby said optical reflectance value is a comparison between a reflectance value at said test line and a reflectance value at said control line.
97. The apparatus of Aspect 55, wherein said apparatus is adapted to perform a continuous image detection of said assay.
98. The apparatus of Aspect 55, wherein said assay is a lateral flow assay.
99. The apparatus of Aspect 98, wherein said assay is a lateral, capillary-flow, elongated test strip.
100. The apparatus of any one of the proceeding Aspects including a means for a power source.
101. The apparatus of any one of the proceeding Aspects wherein said sensor is an optical detector aligned with a light source for detecting transmission of light through said assay.
102. A method of detecting an analyte from an assay, the method comprising:
   a. aligning an optical detector in an optical path with said assay;
   b. acquiring an image detection on said assay due to an aberration on said assay and
   c. signaling said optical detector to perform continuing image detection of said assay to generate said test result.
103. The method of Aspect 102, wherein signaling said optical detector includes instructing said optical detector to monitor a pre-test analysis on said assay.
104. The method of Aspect 103, wherein instructing said optical detector to monitor said pre-test analysis includes decoding a reference coding on said assay.
105. The method of Aspect 104, including activating a corresponding channel in a multichannel reader.
106. The method of Aspect 104, including activating an incubation of said assay.
107. The method of Aspect 102, wherein signaling said optical detector includes instructing said optical detector to generate said test result.
108. The method according to any of the proceeding Aspects wherein detecting an inconsistent reflectance value includes deactivating said system.
109. A kit for detecting an analyte rom an assay comprising:
   a. an optical detector adapted to be aligned in an optical path with said assay and
   b. a microprocessor in communication with said optical detector.
110. The kit of Aspect 109, wherein said wherein said optical detector is adapted to acquire an image detection on said assay due to an aberration on said assay.
111. The kit of Aspect 109, wherein said microprocessor is adapted to signal said optical detector to perform continuous image detection of said assay to generate said diagnostic test result.
112. A lateral, capillary-flow elongated test strip having at least one reagent for the detection of at least one analyte in a sample, said lateral, capillary-flow elongated test strip comprising:
   a. a test zone including immobilized thereon a test zone capture agent adapted for capturing said at least one reagent
   b. a control zone including at least one control zone capture agent having a different binding affinity for said at least one reagent; and
   c. a surface having a reflectance profile adapted to monitor said test strip continuously until the analyte is detected, wherein said test strip generates a detectable signal for upon detection of said analyte in said sample.
113. The apparatus of Aspect 112, wherein said test strip comprises a coding system having at least one reference code with a corresponding testing sequence.
114. The apparatus of Aspect 113, wherein said testing sequence includes at least one temperature adjustment parameter.
115. The apparatus of Aspect 113, wherein said testing sequence includes an optical reader test parameter.
116. The apparatus of Aspect 114, wherein said optical reader test parameter includes a reader channel selection.
117. The apparatus of Aspect 115, wherein said reader test parameter includes an associated feature chosen from a standard curve, a does-response curve and a combination thereof.
118. The apparatus of Aspect 115, wherein said reader test parameter includes at least one associated positive control point and at least one associated negative control point.
119. The apparatus of Aspect 113, wherein said coding system includes a color matrices.
120. The apparatus of Aspect 119, wherein said a color matrices includes a color chosen from red, blue, green and combination thereof.
121. The apparatus of Aspect 119, wherein said a color matrices is associated with a corresponding diagnostic test.
122. The apparatus of Aspect 113, wherein said coding system includes a bar code.
123. The apparatus of Aspect 113, wherein said coding system includes an RFID tag.
124. The apparatus of Aspect 112, wherein said test strip includes a first end having a sample absorbing material.
125. The apparatus of Aspect 124, wherein said test strip includes a peel strip to introduce sample onto the sample absorbing material.
126. The apparatus of Aspect 125, wherein said peel strip includes a peel tab at one end of the peel strip to facilitate movement of said peel strip.
127. The apparatus of Aspect 123, wherein said sample absorbing material is adapted to receive about 0.1 to about 1.0 mL of a fluid.
128. The apparatus of Aspect 124, wherein said sample absorbing material comprises a dry cellulosic material.
129. The apparatus of Aspect 112, wherein said test strip includes an opposed second end having a reactor detector material.
130. The apparatus of Aspect 112, wherein said test strip is adapted for selecting the detection of a diagnostic test group chosen from an antibiotic analyte, toxic analyte, analyte class and combination thereof.
131. The apparatus of Aspect 112, wherein said test strip includes a releasing area having a mobile phase receptor for the at least one analyte.
132. The apparatus of Aspect 112, wherein said test strip is sized and adapted to be enclosed within a test strip cavity.
133. The apparatus of Aspect 112, wherein said test strip is sized and adapted to be enclosed within a test strip cavity of a removable incubation module.
134. The apparatus of Aspect 112, wherein said test zone includes at least one analyte reference line having a theoretical reflectance value.
135. The apparatus of Aspect 134, wherein said theoretical reflectance value is associated with a flow parameter on said test strip.
136. The apparatus of Aspect 112, wherein said test zone includes a first analyte reference line having a first theoretical reflectance value and a second analyte reference line having a second theoretical reflectance value.
137. The apparatus of Aspect 112, wherein said control zone includes at least one control line having a theoretical reflectance value.
138. The apparatus of Aspect 137, wherein said theoretical reflectance value is an optical reflectance value.
139. The apparatus of Aspect 112, wherein said control zone includes a first control line having a first theoretical reflectance value and a second control line having a second theoretical reflectance value.
140. The apparatus of any one of the proceeding Aspects, wherein said reflectance profile is adapted to monitor said test strip prior to the detection of said analyte.
141. The apparatus according to any of the proceeding Aspects, wherein a test result is detected within about thirty to about sixty seconds.
142. In a lateral flow assay for the detection of an analyte and having a test zone and a control zone, a surface having a reflectance profile adapted to enable monitoring said test strip prior to the detection of said analyte and comprising:
   a. at least one flow reference area adapted to monitor a pre-flow development along said assay and
   b. at least one test result reference area adapted to monitor a pre-test detection of said analyte on said assay.
143. The apparatus of Aspect 142, wherein said reflectance profile includes a theoretical light reflectance measurement.
144. The apparatus of Aspect 143, wherein said theoretical light reflectance measurement comprises a no-flow development theoretical value.
145. The apparatus of Aspect 143, wherein said no-flow development value is a reflectance value of about 85.
146. The apparatus of Aspect 145, wherein a reflectance value of greater than about 85 generates a signal to deactivate said detection of said analyte.
147. The apparatus of Aspect 142, wherein said flow reference area includes at least one downstream flow reference line.
148. The apparatus of Aspect 147, wherein said downstream flow reference line includes a theoretical reflectance value after said flow reference line receives reagent flow thereon.
149. The apparatus of Aspect 142, wherein said flow reference area includes an intermediary flow reference line and a downstream flow reference line.
150. The apparatus of Aspect 149, herein said intermediary flow reference line includes a theoretical reflectance value after said flow reference line receives reagent flow thereon.
151. The apparatus of Aspect 143, wherein said theoretical light reflectance measurement comprises a no-analyte pre-test development theoretical value.
152. The apparatus of Aspect 142, wherein said test result reference area includes at least one test line having a theoretical reflectance value.
153. The apparatus of Aspect 142, wherein said test result reference area includes at least one control line having a theoretical reflectance value.
154. The apparatus of Aspect 142, wherein said test result reference area includes at least one test line having a theoretical reflectance value and at least one control line having a theoretical reflectance value.
155. The apparatus of Aspect 154, wherein a pre-set difference between said at least one test line's theoretical reflectance value and said at least one control line's theoretical reflectance value activates a test result.
156. The apparatus of Aspect 154, wherein a pre-set difference between said at least one test line's theoretical reflectance value and said at least one control line's theoretical reflectance value triggers an error.
157. The apparatus of Aspect 156, wherein said error withholds a test result.
158. A lateral, capillary-flow elongated test strip comprising:
   a. a test zone including immobilized thereon a test zone capture agent adapted for capturing at least one binder
   b. a control zone including at least one control zone capture agent having a different binding affinity for said at least one binder;
   c. a surface having a reflectance profile adapted to monitor said teststrip and including (i) at least one flow reference area adapted to enable monitoring a flow development along said assay and (ii) at least one monitor reference area adapted to enable monitoring detection of said analyte on said assay; and
   d. a coding system having at least one coding signal to correspond to testing sequence to characterize said test strip.
159. The apparatus of Aspect 158, wherein said testing sequence includes at least one temperature adjustment parameter.
160. The apparatus of Aspect 158, wherein said testing sequence includes an optical reader test parameter.
161. The apparatus of Aspect 160, wherein said optical reader test parameter includes a reader channel selection.
162. The apparatus of Aspect 160, wherein said optical reader test parameter includes an associated feature chosen from a standard curve, a does-response curve and a combination thereof.
163. The apparatus of Aspect 160, wherein said optical reader test parameter includes at least one associated positive control point and at least one associated negative control point.
164. The apparatus of Aspect 158, wherein said coding system includes a color matrices.
165. The apparatus of Aspect 164, wherein said a color matrices is associated with a corresponding diagnostic test.
166. The apparatus of Aspect 158, wherein said coding system includes a bar code.
167. The apparatus of Aspect 158, wherein said coding system includes an RFID tag.
168. The apparatus of Aspect 158, wherein said test strip includes a first end having a sample absorbing material.
169. The apparatus of Aspect 168, wherein said test strip includes a peel strip to introduce sample onto the sample absorbing material.
170. The apparatus of Aspect 169, wherein said peel strip includes a peel tab at one end of the peel strip to facilitate movement of said peel strip.
171. The apparatus of Aspect 168, wherein said sample absorbing material is adapted to receive about 0.1 to about 1.0 mL of a fluid.
172. The apparatus of Aspect 168, wherein said sample absorbing material comprises a dry cellulosic material.
173. The apparatus of Aspect 168, wherein said test strip includes an opposed second end having a reactor detector material.
174. The apparatus of Aspect 158, wherein said test strip is adapted for selecting the detection of a diagnostic test group chosen from an antibiotic analyte, toxic analyte, analyte class and combination thereof.
175. The apparatus of Aspect 158, wherein said test strip includes a releasing area having a mobile phase receptor for the at least one analyte.
176. The apparatus of Aspect 158, wherein said test strip is sized and adapted to be enclosed within a test strip cavity.
177. The apparatus of Aspect 158, wherein said test strip is sized and adapted to be enclosed within a test strip cavity of a removable incubation module.
178. The apparatus of Aspect 158, wherein said test zone includes at least one analyte reference line having a theoretical reflectance value.
179. The apparatus of Aspect 178, wherein said theoretical reflectance value is associated with a flow parameter on said test strip.
180. The apparatus of Aspect 158, wherein said test zone includes a first analyte reference line having a first theoretical reflectance value and a second analyte reference line having a second theoretical reflectance value.
181. The apparatus of Aspect 158, wherein said control zone includes at least one control line having a theoretical reflectance value.
182. The apparatus of Aspect 181, wherein said theoretical reflectance value is an optical reflectance value.
183. The apparatus of Aspect 158, wherein said control zone includes a first control line having a first theoretical reflectance value and a second control line having a second theoretical reflectance value.
184. The apparatus of Aspect 158, wherein said theoretical light reflectance measurement comprises a no-flow development theoretical value.
185. The apparatus of Aspect 184, wherein said no-flow development value is a reflectance value of about 85.
186. The apparatus of Aspect 185, wherein a reflectance value of greater than about 85 generates a signal to deactivate said detection of said analyte.
187. The apparatus of Aspect 158, wherein said flow reference area includes at least one downstream flow reference line.
188. The apparatus of Aspect 187, wherein said downstream flow reference line includes a theoretical reflectance value after said flow reference line receives reagent flow thereon.
189. The apparatus of Aspect 158, wherein said flow reference area includes an intermediary flow reference line and a downstream flow reference line.
190. The apparatus of Aspect 189, wherein said intermediary flow reference line includes a theoretical reflectance value after said flow reference line receives reagent flow thereon.
191. The apparatus of Aspect 158, wherein said theoretical light reflectance measurement comprises a no-analyte pre-test development theoretical value.
192. The apparatus of Aspect 158, wherein said test result reference area includes at least one test line having a theoretical reflectance value.
193. The apparatus of Aspect 158, wherein said test result reference area includes at least one control line having a theoretical reflectance value.
194. The apparatus of Aspect 158, wherein said test result reference area includes at least one test line having a theoretical reflectance value and at least one control line having a theoretical reflectance value.
195. The apparatus of Aspect 194, wherein a pre-set difference between said at least one test line's theoretical reflectance value and said at least one control line's theoretical reflectance value activates a test result.
196. The apparatus of Aspect 194, wherein a pre-set difference between said at least one test line's theoretical reflectance value and said at least one control line's theoretical reflectance value triggers an error.
197. The apparatus of Aspect 196, wherein said error withholds a test result.
198. A lateral flow assay system to generate a test result from an assay, said system comprising:
   a. an incubator adapted to incubate said assay; and
   b. a reader adapted to read a diagnostic test on said assay that undergoes a change when contacted with a sample to generate said test result, wherein said incubator incubates said assay concurrently as said reader generates said test result.
199. The apparatus of Aspect 198, including a removable assay module.
200. The apparatus of Aspect 199, wherein said removable assay module includes an assay cavity adapted to align said assay with said reader.
201. The apparatus of Aspect 200, wherein said assay is a lateral flow test strip.
202. The apparatus of Aspect 201 , wherein said assay cavity is sized to receive said lateral flow test strip.
203. The apparatus of Aspect 199, wherein said removable assay module includes a hood.
204. The apparatus of Aspect 203, wherein said hood encloses said assay in a closed testing position and exposes said assay in an open access position.
205. The apparatus of Aspect 200, wherein said removable assay module includes a bottom face adapted to align with at least one light aperture on said reader.
206. The apparatus of Aspect 205, wherein said bottom face includes an adjustment fastener adapted to secure said assay cavity in an optical alignment with said reader.
207. The apparatus of Aspect 205, wherein said bottom face includes an engagement lip to position said bottom face with said reader.
208. The apparatus of Aspect 199, wherein said removable assay module includes at least one optical window.
209. The apparatus of Aspect 199, wherein said removable assay module is adapted to be removed from said system and cleaned from debris.
210. The apparatus of Aspect 198, wherein said incubator incubates said assay in a means for creating an incubation environment.
211. The apparatus of Aspect 198, wherein said incubator includes an insulated base.
212. The apparatus of Aspect 198, wherein said incubator is a temperature adjustable incubator.
213. The apparatus of Aspect 212, wherein said temperature adjustable incubator includes at least one temperature control.
214. The apparatus of Aspect 212, wherein said temperature adjustable incubator includes localized variations changes.
215. The apparatus of Aspect 214, wherein said incubator compensates for localized temperature variations with an analog, proportional control circuit.
216. The apparatus of Aspect 212, wherein said temperature adjustable incubator includes an embedded temperature sensor.
217. The apparatus of Aspect 212. wherein said temperature adjustable incubator includes a potentiometer.
218. The apparatus of Aspect 198, wherein said incubator includes a heater.
219. The apparatus of Aspect 218, wherein said heater is chosen from a ceramic heater, a resistor heater element and a combination thereof.
220. The apparatus of Aspect 198, wherein said incubator includes a cooling system.
221. The apparatus of Aspect 198, wherein said reader performs continuous image detection of said assay to generate said test result.
222. The apparatus of Aspect 221, wherein said continuous image detection includes monitoring a pre-flow development along said assay.
223. The apparatus of Aspect 198, wherein said reader includes a light source oriented in a predetermined pattern with respect to said assay.
224. The apparatus of Aspect 223, wherein said light source includes a first mirror below said light source.
225. The apparatus of Aspect 224, wherein said light source includes a focusing lens adapted to receive light from said first mirror.
226. The apparatus of Aspect 225, wherein said light source includes a second mirror positioned to direct light from the focusing lens to said reader.
227. The apparatus of Aspect 198, wherein said reader includes a sensor.
228. The apparatus of Aspect 227, wherein said sensor is an optical detector aligned with a light source for detecting transmission of light through said assay.
229. The apparatus of Aspect 227, wherein said sensor is a decoding sensor.
230. The apparatus of Aspect 229, wherein said decoding sensor adapted to decode at least one reference code having a corresponding testing sequence on said assay.
231. The apparatus of Aspect 198, wherein said reader includes multiple channels.
232. The apparatus of Aspect 231, wherein each said channel includes an associated feature chosen from a standard curve, a does-response curve, a positive cutoff value, a negative cutoff value and a combination thereof.
233. In an assay system having an incubator and a reader to generate a test result from an assay, a sensor adapted to continuously monitor said assay while said incubator incubates said assay and said reader generates said test result.
234. The apparatus of Aspect 233, wherein said sensor is adapted to generate a no-result reading when said sensor detects an aberration on said assay.
235. The apparatus of Aspect 234, wherein said sensor is an optical detector.
236. The apparatus of Aspect 235, wherein said optical detector is adapted to detect a reflectance value.
237. The apparatus of Aspect 236, wherein said assay includes at least one test zone and at least one control zone, and whereby said reflectance value is a comparison between a reflectance value at said test zone and a reflectance value at said control zone.
238. The apparatus of Aspect 237, wherein said incubator is deactivated when said sensor detects a reflectance value on said assay mat is inconsistent with a predetermined theoretical reflectance value on said assay.
239. The apparatus of Aspect 238, wherein a reflectance value on said assay that is inconsistent with said theoretical reflectance value indicates an inadequate flow on said assay.
240. The apparatus of Aspect 239, wherein a reflectance value on said assay that is inconsistent with said theoretical reflectance value indicates a prior analyte development on said assay.
241. The apparatus of Aspect 240, wherein a reflectance value on said assay that is inconsistent with said theoretical reflectance value indicates a contaminated optical path.
242. The apparatus of Aspect 233, wherein said sensor is adapted to generate a no-result reading when said incubator is opened during incubation.
243. The apparatus of Aspect 233, wherein said sensor adapted to generate a no-result reading when said assay is removed prior to generating a test result.
244. The apparatus of Aspect 233, wherein said sensor is an optical detector adapted to detect a reflectance value and to deactivate said reader when said sensor detects an aberration on said assay.
245. The apparatus of Aspect 244, wherein said assay includes at least one test zone and at least one control zone, and whereby said reflectance value is a comparison between a reflectance value at said test zone and a reflectance value at said control zone.
246. The apparatus of Aspect 245, wherein said incubator is deactivated when said sensor detects a reflectance value on said assay that is inconsistent with a predetermined theoretical reflectance value on said assay.
247. The apparatus of Aspect 246, wherein a reflectance value on said assay that is inconsistent with said theoretical reflectance value indicates an inadequate flow on said assay.
248. The apparatus of Aspect 247, wherein a reflectance value on said assay that is inconsistent with said theoretical reflectance value indicates a prior analyte development on said assay.
249. The apparatus of Aspect 247, wherein a reflectance value on said assay that is inconsistent with said theoretical reflectance value indicates a contaminated optical path.
250. The apparatus of Aspect 233, wherein said sensor is a decoding sensor.
251. The apparatus of Aspect 250, wherein said decoding sensor is chosen from a color sensor, a RFID reader, a barcode reader and a combination thereof.
252. The apparatus of Aspect 233, including a housing adapted to substantially enclose said reader and said incubator.
253. The apparatus of Aspect 252, wherein said housing includes insulation adapted to withstand deformation during said incubation.
254. The apparatus of Aspect 252, wherein said housing includes a cavity adapted to secure said assay and receive light from said reader.
255. The apparatus of Aspect 252, wherein said cavity includes an optical aperture to receive light from said reader.
256. The apparatus of Aspect 252, wherein said cavity includes an adjustable fastener adapted to position said cavity in an optical path with said reader.
257. The apparatus of Aspect 252, wherein said cavity includes insulation adapted to withstand deformation during an incubation period.
258. The apparatus of Aspect 252, wherein said assay is a lateral, capillary-flow test strip.
259. The apparatus of Aspect 252, wherein said housing includes a removable optical window adapted to block debris from said sensor.
260. The apparatus of Aspect 259, wherein said removable optical window includes a handle.
261. The apparatus of Aspect 259, wherein said removable optical window is cleanable.
262. The apparatus of Aspect 259, wherein said removable optical window is disposable.
263. The apparatus of Aspect 259, wherein said removable optical window is slide-mounted.
264. The apparatus of Aspect 251, wherein said housing includes an air opening.
265. The apparatus of Aspect 264, wherein said air opening includes a cap.
266. The apparatus of Aspect 233, wherein said system includes a user interface.
267. The apparatus of Aspect 266, wherein said user interface includes an integrated circuit board supporting a display board.
268. The apparatus of Aspect 266, wherein said user interface adapted to view flow development and said test result.
269. The apparatus of Aspect 266, wherein said user interface adapted to view flow development after said reader has detected at least one flow development on said assay.
270. The apparatus of Aspect 233, wherein said sensor is triggered with an activation element chosen from a hood sensor, an incubator sensor, a trigger switch and a combination thereof.
271. The apparatus of Aspect 233, wherein said sensor monitors a control line to monitor adequate development after generating said test result.
272. In a lateral flow assay system having an incubator and a reader, an assay module that is removable from said reader and comprising:
   a. an assay cavity adapted to align an assay with said reader; and
   b. a hood adapted to enclose said assay in a closed testing position and expose said assay in an open access position.
273. The apparatus of Aspect 272, wherein said assay is a lateral flow test strip.
274. The apparatus of Aspect 273, wherein said assay cavity is sized to receive said lateral flow test strip.
275. The apparatus of Aspect 272, wherein said assay module includes an adjustment fastener adapted to secure said assay cavity in an optical alignment with said reader.
276. The apparatus of Aspect 272, wherein said assay module adapted to be removed from said system and cleaned from debris.
277. A lateral flow assay system to generate a test result from an assay, said system comprising:
   a. an incubator adapted to incubate an assay in an incubation environment; and
   b. a reader adapted to read a diagnostic test on said assay and including (i) a removable assay module, and (ii) a sensor to monitor said assay.
278. The system of Aspect 277, -wherein said removable assay module includes an assay cavity adapted to align said assay with said reader.
279. The apparatus of Aspect 278, wherein said assay is a lateral flow test strip.
280. The apparatus of Aspect 279, wherein said assay cavity is sized to receive said lateral flow test strip.
281. The apparatus of Aspect 277, wherein said removable assay module includes a hood.
282. The apparatus of Aspect 281, wherein said hood encloses said assay in a closed testing position and exposes said assay in an open access position.
283. The apparatus of Aspect 278, wherein said removable assay module includes a bottom face adapted to align with at least one light aperture on said reader.
284. The apparatus of Aspect 283, wherein said bottom face includes an adjustment fastener adapted to secure said assay cavity in an optical alignment with said reader.
285. The apparatus of Aspect 283, wherein said bottom face includes an engagement lip to position said bottom face with said reader.
286. The apparatus of Aspect 277, wherein said removable assay module includes at least one optical window.
287. The apparatus of Aspect 277, wherein said removable assay module adapted to be removed from said system and cleaned from debris.
288. The apparatus of Aspect 277, wherein said incubator incubates said assay in a means for creating an incubation environment.
289. The apparatus of Aspect 277, wherein said incubator includes an insulated base.
290. The apparatus of Aspect 277, wherein said incubator is a temperature adjustable incubator.
291. The apparatus of Aspect 290, wherein said temperature adjustable incubator includes at least one temperature control.
292. The apparatus of Aspect 290, wherein said temperature adjustable incubator includes localized temperature variations.
293. The apparatus of Aspect 292, wherein said incubator compensates for localized temperature variations with a digital control circuit.
294. The apparatus of Aspect 292, wherein said temperature adjustable incubator includes an embedded temperature sensor.
295. The apparatus of Aspect 292, wherein said temperature adjustable incubator includes a potentiometer.
296. The apparatus of Aspect 277, wherein said incubator includes a heater.
297. The apparatus of Aspect 295, wherein said heater is chosen from a ceramic heater, a resister heater element and a combination thereof.
298. The apparatus of Aspect 277, wherein said incubator includes a cooling system.
299. The apparatus of Aspect 277, wherein said reader performs continuous image detection of said assay to generate said test result.
300. The apparatus of Aspect 299, wherein said continuous image detection includes monitoring a pre-flow development along said assay.
301. The apparatus of Aspect 277, wherein said reader includes a light source oriented in a predetermined pattern with respect to said assay.
302. The apparatus of Aspect 301, wherein said light source includes a first mirror below said light source.
303. The apparatus of Aspect 302, wherein said light source includes a focusing lens adapted to receive light from said first mirror.
304. The apparatus of Aspect 303, wherein said light source includes a second mirror positioned to direct light from the focusing lens to said reader.
305. The apparatus of Aspect 277, wherein said sensor is an optical detector aligned with a light source for detecting transmission of light through said assay.
306. The apparatus of Aspect 277, wherein said sensor is a decoding sensor.
307. The apparatus of Aspect 306, wherein said decoding sensor is adapted to decode at least one reference code having a corresponding testing sequence on said assay.
308. The apparatus of Aspect 277, wherein said reader includes multiple channels.
309. The apparatus of Aspect 308, wherein each said channel includes an associated feature chosen from a standard curve, a does-response curve, a positive cutoff value, a negative cutoff value and a combination thereof.
310. The apparatus of Aspect 277, wherein said sensor is adapted to deactivate said incubator when said sensor detects an aberration on said assay.
311. The apparatus of Aspect 310, wherein said sensor is an optical detector.
312. The apparatus of Aspect 311, wherein said optical detector is adapted to detect a reflectance value.
313. The apparatus of Aspect 312, wherein said assay includes at least one test zone and at least one control zone, and whereby said reflectance value is a comparison between a reflectance value at said test zone and a reflectance value at said control zone.
314. The apparatus of Aspect 313, wherein said incubator is deactivated when said sensor detects a reflectance value on said assay that is inconsistent with a predetermined theoretical reflectance value on said assay.
315. The apparatus of Aspect 314, wherein a reflectance value on said assay that is inconsistent with said theoretical reflectance value indicates an inadequate flow on said assay.
316. The apparatus of Aspect 314, wherein a reflectance value on said assay that is inconsistent with said theoretical reflectance value indicates a prior analyte development on said assay.
317. The apparatus of Aspect 314, wherein a reflectance value on said assay that is inconsistent with said theoretical reflectance value indicates a contaminated optical path.
318. The apparatus of Aspect 277, wherein said sensor adapted to deactivate said reader when said sensor detects an aberration on said assay.
319. The apparatus of Aspect 318, wherein said sensor is an optical detector.
320. The apparatus of Aspect 319, wherein said optical detector is adapted to detect a reflectance value.
321. The apparatus of Aspect 320, wherein said assay includes at least one test zone and at least one control zone, and whereby said reflectance value is a comparison between a reflectance value at said test zone and a reflectance value at said control zone.
322. The apparatus of Aspect 321, wherein said incubator is deactivated when said sensor detects a reflectance value on said assay that is inconsistent with a predetermined theoretical reflectance value on said assay.
323. The apparatus of Aspect 322, wherein a reflectance value on said assay that is inconsistent with said theoretical reflectance value indicates an inadequate flow on said assay.
324. The apparatus of Aspect 322, wherein a reflectance value on said assay that is inconsistent with said theoretical reflectance value indicates a prior analyte development on said assay.
325. The apparatus of Aspect 322, wherein a reflectance value on said assay that is inconsistent with said theoretical reflectance value indicates a contaminated optical path.
326. The apparatus of Aspect 277, wherein said sensor is a decoding sensor.
327. The apparatus of Aspect 326, wherein said decoding sensor is chosen from a color sensor, a RFID reader, a barcode reader and a combination thereof.
328. The apparatus of Aspect 277, including a housing adapted to substantially enclose said reader and said incubator.
329. The apparatus of Aspect 328, wherein said housing includes insulation adapted to withstand deformation during said incubation.
330. The apparatus of Aspect 328, wherein said housing includes a cavity adapted to secure said assay and receive light from said reader.
331. The apparatus of Aspect 330, wherein said cavity includes an optical aperture to receive light from said reader.
332. The apparatus of Aspect 330, wherein said cavity includes an adjustable fastener adapted to position said cavity in an optical path with said reader.
333. The apparatus of Aspect 330, wherein said cavity includes insulation adapted to withstand deformation during an incubation period.
334. The apparatus of Aspect 330, wherein said assay is a lateral, capillary-flow test strip.
335. The apparatus of Aspect 328, wherein said housing includes a removable optical window adapted to block debris from said sensor.
336. The apparatus of Aspect 335, wherein said removable optical window includes a handle.
337. The apparatus of Aspect 335, wherein said removable optical window is cleanable.
338. The apparatus of Aspect 335, wherein said removable optical window is disposable.
339. The apparatus of Aspect 335, wherein said removable optical window is slide-mounted.
340. The apparatus of Aspect 328, wherein said housing includes an air opening.
341. The apparatus of Aspect 340, wherein said air opening includes a cap.
342. The apparatus of Aspect 277, wherein said system includes a user interface.
343. The apparatus of Aspect 342, wherein said user interface includes an integrated circuit board supporting a display board.
344. The apparatus of Aspect 342, wherein said user interface adapted to view flow development.
345. The apparatus of Aspect 342, wherein said user interface adapted to view said test result.
346. The apparatus of Aspect 342, wherein said user interface is adapted to view flow development after said reader has detected at least one flow development on said assay.
347. The apparatus of Aspect 277, wherein said sensor is triggered with an activation element chosen from a hood sensor, an incubator sensor, a trigger switch and a combination thereof.
348. A method of generating a test result from an assay, the method comprising:
   a. incubating said assay in an incubation environment; and
   b. reading a diagnostic test on said assay concurrently as said incubator incubates said assay.
349. The method of Aspect 348, including sensing said assay continuously while said incubator incubating said assay.
350. The method of Aspect 348, including deactivating said incubator when sensing an aberration on said assay.
351. The method of Aspect 348, including removing a removable assay module for cleaning debris from said assay module.
352. The method of Aspect 348, including adding a test sample to a test medium to create
   said assay.
353. The method of Aspect 352, including enclosing said test medium within said reader.
354. The method of Aspect 352, including positioning a sensor relative to said test medium so that a change on said test medium is detectable by said sensor.
355. The method of Aspect 348, inducting decoding a reference coding on said assay.
356. The method of Aspect 355, including selecting a channel in said reader corresponding to said reference coding on said assay.
357. The method of Aspect 356, including incubating said assay within the incubator according to said reference coding on said assay.

## Claims

1. An onboard vehicle system to generate an antibiotic test result, said system comprising a reader in communication with a vehicle microprocessor assembly having an antibiotic test result display and arranged with an antibiotic analyte assay which, when contacted with a sample, is configured to generate development of said antibiotic test result in an onboard vehicle testing environment and display said antibiotic test result on said onboard vehicle system.

2. The system of Claim 1, including a user interface adapted to display said antibiotic test result.

3. The system of Claim 2, wherein said user interface communicates said antibiotic test result to alert a user on a vehicle.

4. The system of any of the preceding Claims wherein said reader is an optical reader.

5. The system of Claim 4, wherein said antibiotic analyte assay comprises a test strip having at least one test line and at least one control line.

6. The system of any of the preceding Claims, wherein said reader performs a plurality of detections of said antibiotic analyte assay.

7. The system of any of the preceding Claims, wherein said reader performs a continuous detection of said antibiotic analyte assay.

8. The system of any of the preceding Claims, wherein said onboard vehicle testing environment comprises an incubation environment which is arranged to incubate said assay.

9. The system of Claim 8, wherein said system is arranged to synchronize incubation in said incubation environment with detection on said antibiotic analyte assay.

10. The system of any one of the preceding Claims, wherein said system synchronizes a test progress with detection.

11. An onboard vehicle assembly to generate an antibiotic test result, said assembly comprising: a vehicle and an onboard vehicle system according to any one of the preceding Claims.
